# EUROPÄISCHE PATENTANMELDUNG

(11) **EP 1 142 634 A2**
(43) Veröffentlichungstag der Anmeldung: **10.10.2001**
(21) Anmeldenummer: 01103421.2
(22) Anmeldetag: 14.02.2001
(51) Int. Cl.: B01J 20/24, B01J 20/32, C02F 1/28

(54) **Wirkstoffhaltige Produkte aus Pflanzen-, Flechten- und Tierorganen**

(30) Priorität: 16.02.2000 DE 10007039
(71) Anmelder: Oeste, Franz-Dietrich, 35274 Kirchhain (DE); Haas, Rainer, 35037 Marburg (DE)
(72) Erfinder: Oeste, Franz-Dietrich, 35274 Kirchhain (DE); Haas, Rainer, 35037 Marburg (DE)
(74) Vertreter: Ackermann, Joachim, Dr.

(57) **Zusammenfassung**

Gegenstand der Erfindung sind die mit Wirkstoffen beladenen Produkte, und von ihren natürlichen Bindemitteln nicht abgereicherten Produkte, die aus dem Organ-Gewebe aus einer oder mehrerer der Gruppen Pflanzen gewonnen werden, und die mit Wirkstoffen beladenen Produkte aus dem Organ-Gewebe aus einer oder mehreren der Gruppen Flechten und Tiere gewonnen werden, deren Gewebe oder zumindest Teile davon über einen reißfesten Wolle-ähnlichen Habitus verfügt oder in den sie mittels künstlicher vorzugsweise mechanischer Mittel gebracht wurden. Die Wolle-ähnlichen Teile sind für einige Produkt-Anwendungszwecke vorzugsweise durch Zerteilen der Rohstoffe in einen zerkleinerten Zustand überführt worden. Den Produkten ist durch Beladen mit einem oder mehreren Wirkstoffen ein Sorptionspotential und/oder ein Desorptionspotential aufgeprägt. Die Produkte aus mit Wirkstoffen beladenen Teilen aus Pflanzen, Flechten und Tieren lassen sich z.B. als Filtermaterial für Gase und Flüssigkeiten, zur Behandlung von Lebens- und Genußmitteln zur Geschmacksverbesserung und Entgiftung, und als Probenahme-, Detektions- und Analysenmittel einsetzen.

## Beschreibung

Gegenstand der Erfindung sind die mit Wirkstoffen beladenen und von ihren natürlichen Bindemitteln nicht abgereicherten Produkte, die aus dem Organ-Gewebe aus einer oder mehrerer der Gruppen Pflanzen gewonnen werden, und die mit Wirkstoffen beladenen Produkte aus dem Organ-Gewebe aus einer oder mehrerer der Gruppen Flechten und Tiere gewonnen werden, und deren Gewebe oder zumindest Teile davon über einen reißfesten Wolle-ähnlichen Habitus verfügt oder in den sie mittels künstlicher vorzugsweise mechanischer Mittel gebracht wurden. Die Wolle-ähnlichen Teile sind für einige Produkt-Anwendungszwecke vorzugsweise durch Zerteilen der Rohstoffe in einen zerkleinerten Zustand überführt worden. Den Produkten ist durch Beladen mit einem oder mehreren Wirkstoffen ein Sorptionspotential und/oder ein Desorptionspotential aufgeprägt. Die Produkte aus mit Wirkstoffen beladenen Teilen aus Pflanzen, Flechten und Tieren lassen sich z.B. als Filtermaterial für Gase und Flüssigkeiten, zur Behandlung von Lebens- und Genußmitteln zur Geschmacksverbesserung und Entgiftung und als Probenahme-, Detektions-und Analysenmittel einsetzen.

Die Beladung von festen Partikeln mit sorbierenden Wirkstoffen ist ein an und für sich bekannter Vorgang. Die Beladung fester Partikel beispielsweise mit Eisenoxiden oder Manganoxiden als sorbierenden Wirkstoffen wird zum Beispiel in der deutschen Offenlegungsschrift 19618458 beschrieben. Überraschend zeigte sich, daß sich anstelle der festen Partikel auch natürliche biegsame Fasermaterialien haltbar mit diesen und verwandten Wirkstoffen belegen lassen, insbesondere natürliche Zellulosefasern, wie sie für Faserstoffe wie Papier, Zellstoff und die dafür eingesetzten Fasern üblich sind, ohne daß die Beschichtung mit diesen an und für sich spröden Substanzen zum Abblättern neigt. In der deutschen Patentanmeldung 198 34 916.5 vom 3.8.1998 und in der deutschen Gebrauchsmusteranmeldung 299 22 420.1 vom 21.12.1999, wird der Einsatz wirkstoffbeladener Papierwolle für die Zwecke der Flüssigfiltration beschrieben. Nach der deutschen Patentanmeldung 199 50 980.8 vom 24.10.1999, eignet sich derartige Papierwolle auch für die Gasfiltration. Zahlreiche Beispiele von Wirkstoffen, die in das Papier nachträglich durch Imprägnation oder von vorneherein bei der Papierherstellung eingearbeitet werden können, werden in der Patentanmeldung PCT/EP 99/06755 vom 13.9.1999 und der deutschen Patentanmeldung 198 42 528.7 vom 18.09.1998 mitgeteilt. Wirkstoffbeladenes Papier zur Geschmacksverbesserung von Kaffee wird in der deutschen Patentanmeldung 199 15 177.6 vom 3.4.1999 beschrieben. Neben Einsatzmöglichkeiten zur Filtration und Geschmacksverbesserung eignet sich die Papierwolle aber auch als Wirkstoff-, Medikament-, Geschmacks-, Geschmacksverstärker- und Geruchträger. Sie wird auch zur Einarbeitung in die entsprechenden Lebensmittel und Futtermittel als Zusatzstoff empfohlen. Weil sie sich für die Herstellung hochreaktiver Filterbetten eignet, wird sie auch als Detektionsmittel in den entsprechenden Einrichtungen zur Untersuchung von Gasen, Erdreich und Gewässern vorgeschlagen, wie es z.B. in der deutschen Patentanmeldung 199 47 635.7 vom 2.10.1999 beschrieben wird.

In der deutschen Offenlegungsschrift 19623900 werden zerkleinerte pflanzliche faserhaltige Träger zur Beladung mit Wirkstoffen aus der Gruppe der Lebensmittelzusatzstoffe zur Herstellung von Teemischungen oder als Nahrungszusatzstoffe beschrieben. Diese zerkleinerten pflanzlichen Träger sind ungeeignet für die direkte Anwendung zur Wasserbehandlung wie z.B. die Wasser- und Gas-Filtration oder die Herstellung von flächigen Fasermaterialien für diese und ähnliche Anwendungen, weil auch sie aus weitgehend denaturiertem wenig reißfesten Pflanzenträgermaterial bestehen.

Die Herstellungsmethoden für Papier, Zellstoff, Halbzellstoff und Holzschliff aus dem Planzenorgangewebe Holz als Rohstoff für die wirkstoffbeladenen Fasermaterialien enthalten komplexe mechanische und chemische Aufschluß-Behandlungen zur Faserkonditionierung. Diese dienen insbesondere der Faserkonditionierung und Entfernung der Pflanzenfaserbindemittel, insbesondere der Ligninentfernung. Die chemische Behandlung, die diese Fasern dabei erfahren, verursacht eine wesentliche Vergrößerung der Faseroberläche durch Aufrauhen, Ätzen oder Längsteilung; sie verbessert dadurch zwar die Haftung der spröden Wirkstoffe auf diesen flexiblen Trägern, vermindert jedoch die Reißfestigkeit der Naturfaserverbunde durch Entfernen oder Denaturieren der Bindemittelkomponenten. Ausgenommen von der chemischen Behandlung zur Ablösung von Bindemittelkomponenten ist die Baumwolle, die auch zur Papier- und Zellstoffherstellung eingesetzt wird.

Durch diese chemischen Schritte kann aber die Umwelt erheblich belastet werden. Es muß daher nach Alternativen gesucht werden, die nicht nur ökonomischer, sondern auch umweltverträglicher sind.

Es wurde hier nun überraschend gefunden, daß die chemisch unveränderten Pflanzenorganteile, deren Bestand an Faserbindemitteln unverändert gelassen worden ist, z.B. die wolleähnlichen Spanprodukte aus holzigen Pflanzen, mindestens ebensogut und haltbar mit Wirkstoffen beladen werden können und ebenso aktive wirkstoffbeladene faserhaltige Materialien für die genannten Zwecke ergeben können wie die chemisch vorbehandelten Gewebeteile und Gewebeteilgemische, aus denen z.B. Zellstoff, Papier und Papierwolle zusammengesetzt ist. Außerdem haben viele der mit Wirkstoffen beladenen natürlichen Rohstoffe bessere Eigenschaften hinsichtlich ihrer mechanischen Stabilität als entsprechende chemisch vorbehandelte Komponenten. Sie eignen sich daher ebenso gut für die meisten der oben genannten Zwecke, wie z.B. die dort auch genannte Papierwolle.

Gegenstand der Erfindung sind die mit Wirkstoffen beladenen aus reißfesten wolleähnlichen Organgewebeteilen hergestellten diese Mittel enthaltenden und ggf. geformten Stoffe, die hier fortan mit dem Synonym "Produkte" bezeichnet werden. Die Produkte werden erfindungsgemäß hergestellt aus chemisch unbehandelten Pflanzenorgangeweben, deren Bestand an Faserbindemitteln unverändert gelassen worden ist. Es wurde auch gefunden, daß dazu auch Flechtenorgangewebe und Tierorgangewebe eingesetzt werden können.

Die Begriffe Organgewebe oder Organe umfassen sowohl komplette Organismen, wie Pflanzen, oder Teile davon.

Unter dem Begriff reißfeste wolleähnliche Organgewebeteile wird hier verstanden
- die ehemals belebte und einem künstlichen physikalischen und/oder chemischen Prozeß ausgenommen dem mechanischen Herstellungsprozeß der Wolleherstellung nicht unterworfene Pflanzen-Zellsubstanz und/oder
- die ehemals belebte Flechten-Zellsubstanz und/oder
- die ehemals belebte tierische Zellsubstanz und/oder ihr Zellsubstanz-Stützgewebe.

Als Pflanzenorgangewebe-Rohstoff werden für die Produkte vorzugsweise Wolle oder "Locken" bildende schmale und breite Langspäne aus faserhaltigen Pflanzen und Pflanzenbestandteilen wie z.B. Holz, Mark und Kokosfaserwolle, Bastwolle, Bambusfaserwolle, Stroh und Heu, Wurzelballen, Moos und Luffa, das Fasernetz des Schwammkürbis, verwendet. Vorzugsweise verwendete Moose sind Torfmoose aus den Gattungen Sphagnum und seine abgestorbenen Teile in der Form von Sphagnum-Torf. Unter Holzwolle werden hier aber auch die bekannten Hobelspan-"Locken" verstanden, bei denen die Breite des Spanes ein Vielfaches der Dicke des Hobelspanes beträgt.

Vorzugsweise verwendete Flechtengewebe-Rohstoffe für die Produkte sind die Bart-förmigen wolleähnlichen Flechten aus den Gattungen Usnea, Bryoria, Evernia, Ramalina, Parmelia, Xanthoria und die Flechten der Flechtenheide aus den Gattungen Cladonia, Alectoria und Cetraria.

Vorzugsweise verwendete Tierorgangewebe für die Produkte sind die haltbaren zähelastischen Spongin-Schwammskelett-Substanzen derjenigen Schwammarten, die über zähelastische Sponginsubstanz auch im abgestorbenen Zustand verfügen. Von den Schwämmen werden vorzugsweise Hornkieselschwämme und Baumfaserschwämme, wie z.B. Spongia officinalis, Haliclona losanoffi, Haliclona oculata, Axinella verrucosa, Polymastia robusta, verwendet. Weiterhin werden bevorzugt die Skelett-Substanzen von Horn- und Lederkorallen eingesetzt. Von den Wirbeltieren eignen sich die Hautanhänge, insbesondere die Federn und Daunen und weniger bevorzugt die Fischschuppen als Rohstoffe für das erfindungsgemäße Verfahren.

Zusammenfassend lassen sich die Rohstoffe zur Herstellung der Produkte wie folgt charakterisieren: Es handelt sich um Organ-Teile aus einer oder mehrerer der Gruppen Pflanzen, Flechten und Tiere, deren gesamtes Gewebe oder zumindest überwiegende Teile desselben sich in einem, zumindest im feuchten und/oder trockenen Zustand, schmiegsamen flauschartigen Wolle-ähnlichen Zustand befindet. Es kann in diesen Zustand auch mit der Hilfe künstlicher Mittel überführt werden. Der Begriff der Wolle-Ähnlichkeit bezieht sich auch auf die von Wolle abweichenden mikroskopischen und/oder makroskopischen Wirr-Faser-Gefügestrukturen und/oder Wirr-Faserbündel-Gefügestrukturen, bei denen die Fasern und/oder Faserbündel verzweigt sind und/oder miteinander verbunden sind. Die Fasern bzw. Faserbündel verfügen dabei über Rückstellkräfte, die einem vollständigen Zusammenstauchen unter dem Eigengewicht im irdischen Gravitationsfeld widerstehen können. Ausdrücklich ausgenommen von den erfindungsgemäß eingesetzten Rohstoffen ist die Baumwolle.

Zu derartigen wolligen Substanzen können all jene Pflanzen-, Tier- und Flechten-Organgewebe verarbeitet werden, die zerteilt oder im natürlichen Zustand belassen und im getrockneten und im wieder angefeuchteten Zustand eine ausreichende Strukturstabilität für die erfindungsgemäßen Wirkstoffbeladung und die Anwendungszwecke der Produkte aufweisen. Die Einsatzmöglichkeiten der Produkte sind vielfältig. Sie reichen z.B. von der Herstellung strukturstabiler Festbetten für die Filtration von Flüssigkeiten und Gasen, Nutzung als Sorbens, als Desorbens, und als Lebensmittel- und Futtermittel-Zusatzstoff.

Unter der erfindungsgemäßen Beladung mit Wirkstoffen werden all jene Wirkstoffe verstanden, die sich aus einer Lösung und oder Dispersion auf und zwischen den wolleähnlichen Fasern bzw. Faserbündeln ablagern lassen und mit diesen ein Komposit bilden, aber insbesondere auch solche, die sich als Imprägnierung oder Beschichtung in und auf den Faserbündeln ablagern lassen. Es können in dem wolleähnlichen Wirkstoff auch Fasern und Partikel aus herkömmlichen Fasern oder auch herkömmlichen Fasern, die mit Wirkstoffen beschichtet sein können, abgelagert und eingelagert werden. Auch können die wirkstoffhaltigen Organ-Teile Bestandteil von faserhaltigen Kompositen sein; auch können sie nicht mit Wirkstoffen beschichtete Anteile von Organ-Teilen enthalten. Der auf und/oder zwischen den Organ-Teilen der Produkte aufgebrachte Wirkstoff ist durch eine oder mehrere Stoffeigenschaften gekennzeichnet. Nämlich daß er
sorbierend wirkt auf einen oder mehrere der gasförmigen und/oder der gelösten Stoffe aus den Gruppen der organischen Stoffe, der anorganischen Stoffe, der anionischen Stoffe, der kationischen Stoffe der kolloidalen Stoffe, und der mizellaren Stoffe;
chemisch umsetzend wirkt auf einen oder mehrere der in wäßrigen und nichtwäßrigen Flüssigkeiten und/oder Gasen dispergierten und/oder gasförmigen und/oder gelösten Stoffe;
chemisch umsetzend wirkt auf einen oder mehrere der in wäßrigen und nichtwäßrigen Flüssigkeiten und/oder Gasen dispergierten und/oder gasförmigen und/oder gelösten Stoffe bei photolytischer und/oder strahlenchemischer Anregung;
katalytisch beschleunigend und/oder katalytisch lenkend auf chemische Umsetzungen von Stoffen wirkt, die in wäßrigen und nichtwäßrigen Flüssigkeiten und/oder Gasen dispergiert und/oder gasförmig und/oder gelöst vorliegen;
zur Freisetzung von einem oder mehreren Stoffen und/oder Partikeln in einer oder mehrerer der Formen dispergierte Stoffe, gasförmige Stoffe, gelöste Stoffe, lebende Mikroben, Viren, Mehrzeller, Zysten, Sporen, Eier, Larven und sonstigen Lebensformen fähig ist;
als Nährstoff- und/oder Lockstoff-haltiges Substrat wirkt, das einer oder mehreren der Lebensformen Einzeller, Viren, und/oder mehrzelligen Lebenwesen für einen oder mehrere der Zwecke Nahrungsgrundlage, Quelle zur Aufnahme essentieller Stoffe und Besiedlungshabitat dient.

Rohstoffe für die Produkte sind jedoch auch jene tierischen Gewebe, die einer chemischen Behandlung unterzogen wurden, wie z.B. die chemische Behandlung von Schwämmen, Horn- und Lederkorallen, die z.B. zu ihrer Entfärbung, zur Beseitigung mineralischer Komponenten, zur Sterilisation sowie zur Beseitigung der leicht abbaubaren Protein-haltigen Komponenten dient. Wenn auch nicht bevorzugt, so kann doch auch durch Gerbung tierisches Gewebe in beständige wollige Struktur überführt werden. Chemisch behandelte tierische Organgewebe und auch chemisch behandelte Flechtenund Pflanzenorgangewebe sind damit ebenfalls Rohstoffe, aus denen die Produkte hergestellt werden können.

Die für das erfindungsgemäße Produkt-Herstellungsverfahren bevorzugten Pflanzenorgangewebe-, Tierorgangewebe- und Flechtenorgangewebe-Teile erhalten ihre Stabilität aus einem Gefüge aus Fasern und einem Bindemittel, mit dem die Fasern miteinander verbunden sind. Die Pflanzenfasern bestehen aus Cellulose, die faserförmigen Organe der Flechten bestehen aus Chitin und die faserförmigen Organe der Schwämme und Hornkorallen aus Proteinfasern. Als Bindemittel wirken z.B. Lignine und Saccharide, darunter z.B. Pektinsäuren und Hemicellulosen, sowie Huminstoffe. Die als Rohstoffe eingesetzten Pflanzenorgane werden keiner chemischen Behandlung unterzogen, um Ihnen die Bindemittelkomponenten zu entziehen. Das gilt vorzugsweise auch für Tierund Flechtenorgane als Produktrohstoffe.

Hierdurch unterscheiden sich insbesondere die eingesetzten Pflanzenorgangewebe wesentlich von den Faserstoffen Papier, Zellstoff oder Holzschliff, denen entweder das Faserbindemittel entzogen wurde oder bei denen zumindest die Faser-Bindemittelbindung durch chemische und/oder thermische Einwirkung wesentlich geschwächt wurde. Bei diesen pflanzenstämmigen überwiegend Pflanzenfasern enthaltenden Faserstoffen für die Zellstoff- und Papierindustrie wurden die Fasern auf physikalischem und/oder chemischem Weg aus dem natürlichen Bindemittel-Faserverbund herausgelöst; zumindest wurde der Faserverbund durch physikalische oder chemische Prozesse in einen denaturierten Zustand überführt. Dadurch sind die ursprünglichen mechanischen und zum großen Teil auch chemischen Eigenschaften dieses Materials verloren gegangen.

Die in einem durch chemische Einwirkung nicht denaturierten Zustand sich befindende Pflanzen-Rohstoff-Grundlage, auf die der Wirkstoffgehalt zur Erzeugung der erfindungsgemäßen Produkte aufgetragen wird, ist der wesentliche Unterschied der erfindungsgemäßen wirkstoffhaltigen Teile aus Pflanzen, Tieren und Flechten zu den bekannten ählichen wirkstoff-haltigen faserhaltigen Mitteln. Ähnliche wirkstoff-haltigen faserhaltigen Mittel, die mit diesen Produkten vergleichbar sind, sind z.B. die wirkstoffhaltigen Papiere und Papierwollen, die neuerlich zur Anwendung in der Trinkwasserreinigung empfohlen werden. Eingangs wurde auf diesen Stand der Technik hingewiesen.

Die Herstellung von Papier aus Holz ist ein relativ aufwendiger Prozeß. Es wurde hier nun überraschend gefunden, daß z.B. Wollen aus Holz, ohne sie chemisch aufzuschließen, nahezu ebensogut mit Wirkstoffen beladen werden können wie Papier bzw. Papierwolle. Außerdem haben die Produkte bessere Eigenschaften hinsichtlich ihrer mechanischen Stabilität. Sie eignen sich daher mindestens ebenso gut für die meisten der oben genannten Zwecke wie die dort verwendete Papierwolle.

Zum Teil können auch die natürlichen Wirkstoffe, die in den Produkten als undenaturierte Bindemittel zwischen dem Fasergewebe vorkommen, vorteilhaft für die erfindungsgemäßen Zwecke genutzt werden. So eignet sich isländisches Moos bereits als solches zur Sorption der Alkalien aus den höheren Perioden, der Erdalkalien sowie der Schwermetalle und die undenaturierten Ligninkomponenten der Wollen aus Planzen eignen sich teilweise ebenso gut wie Aktivkohle für die Halogenreduktion zu Halogenid in gechlortem Wasser.

Die Herstellung des Produktrohstoffs Holzwolle kann in an und für sich bekannten Einrichtungen geschehen, mit denen dünne Holzschälbahnen in schmale Späne geschnitten werden, wobei die Faser vorzugsweise parallel zum Schnitt verläuft. Beispiele für solche Einrichtungen sind z.B. zylindrische Walzenpaare, in die umlaufende Nuten derart eingeschnitten sind, daß die zwischen den Nuten stehengsbliebenen umlaufenden Stege von der gleichen Breite wie die Stege sind und die derart gegeneinander laufen, daß die Stege in die Nuten eingreifen. Holzschälbahnen, die in ein derart gegeneinander drehendes Walzenpaar eingeführt werden, werden in streifenförmige Späne geschnitten, die exakt der Breite der Nuten bzw. Stege entsprechen. Mittels derartiger Einrichtungen können auch Holzspanstreifen hergestellt werden, deren einzelne Holzspanstreifen nicht gerade geschnitten sind, sondern die zick-zack-förmig oder wellenförmig geschnitten sind.

Anstelle einer Herstellung der Nuten und Stege auf den Walzen auf der Drehbank können diese auch nach anderen an und für sich ebenfalls bekannten Verfahren der Werkzeugherstellung hergestellt werden. Dies gilt besonders für feine Nuten und Stege unter 0,5 mm Steg- und Nutenbreite, die zur Herstellung feiner Streifen notwendig sind oder auch für zick-zack- oder wellenförmig geschnittene Holzwolle.

Holzwolle kann zwar auch direkt durch das Abhobeln geeigneter Stämme auf der Drehbank gewonnen werden; die derart gewonnene Wolle ist wegen ihrer wesentlich schlechteren mechanischen Eigenschaften weniger bevorzugt, als diejenige, bei der die Faserrichtung annähernd parallel zum Schnitt verläuft. Derartige Holzwolle kann auf üblichen Holzwollemaschinen gewonnen werden, wie sie in der einschlägigen Literatur beschrieben werden (F. Kollmann: Technologie des Holzes und der Holzwerkstoffe, 2. Band, Springer Verlag, 1955, Seite 470). Spandicken bis herunter zu 0,01 mm bei Spanbreiten bis hinunter zu 0,2 mm lassen sich mit derartigen Maschinen ohne Weiteres erzielen.

Die bevorzugte Breite der einzelnen Holzspanstreifen, aus der sich die erfindungsgemäße Holzwolle zusammensetzt, liegt zwischen 0,02 mm und 1 cm; besonders bevorzugt ist aber eine Breite der Holzspanstreifen, die zwischen 0,2 mm und 2 mm liegt.

Holzwolle aus sehr schmalen Holzspanstreifen wird bevorzugt aus sehr dünnen Holzschälbahnen hergestellt; solche aus breiteren Holzspanstreifen bevorzugt aus entsprechend dickeren Holzschälbahnen. Die bevorzugte Dicke der für die Herstellung der Holzwolle geeigneten Holzschälbahnen liegt zwischen 0,01 mm und 1 mm.

Die Produkte enthalten bevorzugt solche Wirkstoffkomponenten, die dazu geeignet sind, den beabsichtigten Hauptzweck ihres Einsatzes, nämlich den Filtrationsvorgang, möglichst effektiv zu gestalten. Es ist aber ohne Weiteres auch möglich, einen oder mehrere Wirkstoffkomponenten erst im Verlaufe ihres Einsatzes auf den Wollen abzuscheiden.

Es hat sich überraschend gezeigt, daß die erfindungsgemäßen Produkte hervorragende Filtrations-Eigenschaften haben. Sie sind besonders gut für die Tiefenfiltration als Festbettfilter geeignet. Das gilt ganz besonders für die Abscheidung gelöster oder gasförmiger Stoffe, aber auch für die Abscheidung von Partikeln, Tröpfchen, Nebeln und Kolloiden.

Die bevorzugten Wirkstoffkomponenten, die in den Produkten Verwendung finden, sind all jene Stoffe, die dazu geeignet sind, mit Flüssigkeits- und/oder Gasinhaltsstoffen Bindungen und/oder Reaktionen einzugehen, mittels derer diese abgebaut werden oder an die wirkstoffbeladenen Wollen und Späne gebunden werden. Als Bindungsmechanismen kommen dafür in Frage z.B. die physisorptive, chemisorptive und die adhäsive Bindung. Als Abbaureaktionen kommen z.B. in Frage Oxidation, Reduktion, Photokatalyse, Oxidations- und Reduktions-katalytische Reaktionen.

Solche Wirkstoffkomponenten zum Einsatz in den Produkten sind z.B. oberflächenreiche Stoffe oder Stoffgemische aus den Gruppen der schwerlöslichen oder unlöslichen Oxide, Mischoxide und Hydroxide z.B. als gefälltes Eisen-lll-hydroxid, aus den Gruppen der Elemente wie z.B. der Kohlenstoffe z.B. als Aktivkohlen oder Ruße, des Eisens z.B. als eisenhaltige Kohlenstoffe, Platinmetalle, des Silbers und Goldes z.B. als Kolloide, geätzte Legierungen oder Folien, aus den Gruppen der schwerlöslichen oder unlöslichen Salze, z.B. als Silberchlorid oder Schwermetallsulfid, aus den Gruppen der Silikate z.B. als Zeolith oder Schichtsilikat in der Form von Ton, Vermiculit oder Bleicherde, aus den Gruppen der Katalysatoren, Photokatalysatoren und Enzyme z.B. als Eisenporphyrin, Titandioxid oder Peroxidase, aus den Gruppen der Komplex- und Einschlußverbindungs-Bildner z.B. als Kronenether, Lignin und seine Derivate oder Huminstoff, aus den Gruppen der lonenaustauscher-Harze z.B. als Kationenaustauscherharz oder Anionenaustauscherharz, aus den Gruppen der gelbildenden Stoffe z.B. als Derivate der Polyacrylsäure oder der Carboxymethylcellulose oder der Alginsäure oder des Chitosans oder des Xanthans.

Neben solchen Wirkstoffen, die direkt die Filtrationseigenschaften der Produkte beeinflussen, können die Teile auch Komponenten enthalten, die ihre Dichte beeinflussen, z.B. Schwerspat, Glas- oder Kunstharzbläschen. Insbesondere Teile aus Holz, Stroh, Bambus, Kork, Mark oder Flechten können eine wesentlich geringere Dichte als Wasser haben und müssen beschwert werden, um ihr Aufschwimmen bei bestimmten Filtrationsverfahren zu verhindern. Hierfür eignet sich eine z.B. eine Schwerspatbeladung.

Als Produkte können auch wirkstoffbeladene Wollen im Gemisch mit Papierwolle bzw. wirkstoffbeladener Papierwolle oder anderen Fasern und Partikeln eingesetzt werden. Als sonstige Faserkomponenten und/oder Partikelkomponenten neben Papierwolle kommen alle Fasern und Partikel aus den Gruppen der organischen und anorganischen Naturstoffe und aus den Gruppen der organischen und anorganischen künstlichen Stoffe sowie die chemisch und/oder physikalisch modifizierten Stoffe natürlicher und künstlicher Herkunft in Frage.

Produkte aus unverrottbaren oder schwer verrottbaren Stoffen, wie z.B. Lärchenholz ist bevorzugt für Filter geeignet, die über Tage, Wochen oder auch Monate im Festbett-Wasserfilter verbleiben oder die zum Einsatz in Klimaanlagen oder unter hohem Feuchtigkeitsgehalt bei der Gasfiltration eingesetzt werden. Für kurzfristigen Einsatz im Wasserbereich, zur Filtration nichtwäßriger Flüssigkeiten und zur Filtration von Gasen eignen sich auch leicht verrottbare Materialien, z.B. Weichhölzer. Beispielsweise durch Einsatz von Jod- und/oder Silberverbindungen lassen sich auch leichtverrottbare Wirkstoffkomponenten und leichtverrottbare Holzkomponenten in den Wollen und Spänen ebenfalls gegen Verrottung bzw. Verkeimung stabilisieren.

Die Herstellung der Produkte läßt sich zusammenfassend wie folgt kennzeichnen:
daß die Prozeßfolge zur Herstellung der Produkte für den einen Fall, daß die Produkte Pflanzengewebe enthalten, die ggf. notwendige Überführung der Pflanzenteile bis in den Wolle-ähnlichen Zustand ausschließlich Prozeßschritte mechanischer Bearbeitung und/oder biologischer Metabolisation und/oder natürlicher bodenchemischer bzw. geochemischer Umsetzung umfassen;
daß die Prozeßfolge zur Herstellung der Produkte mindestens eine Prozeßstufe enthält, in der ein Wirkstoff und/oder ein Wirkstoffprecursor aus einem fluiden Medium auf den wolleähnlichen und/oder wolleähnlich konditionierten Gewebeteilen aufgetragen wird und/oder auf diesen angelagert wird und/oder in diesen eingelagert wird und
daß die Prozeßfolge Herstellung der Produkte mindestens eine Prozeßstufe enthält, in der ein Wirkstoffprecursor, der auf den wolleähnlichen und/oder wolleähnlich konditionierten Gewebeteilen aufgetragen worden ist und/oder auf diesen angelagert worden ist und/oder in diesen eingelagert worden ist, durch mindestens eine chemische und/oder physikalische Reaktion in einen Wirkstoff umgewandelt worden ist;
daß die Wirkstoffe auch in partikulärer, plättchenförmiger, bläschenförmiger, faserförmiger oder nach andersartigen Geometrien geformten Form als solche oder mit Wirkstoffen beschichtete Partikel in dem Produkt fixiert oder unfixiert vorliegen können.

Es kann in einigen Fällen vorteilhaft sein, wenn die hergestellten Produkte, vorzugsweise diejenigen aus Holz, nicht aus "Endlos"-Streifen bestehen, sondern aus Streifen, die vorzugsweise auf Längen von unter 200 mm besonders bevorzugt auf auf Längen von unter 100 mm geschnitten sind, weil sie sich dadurch mit besserer Verteilung in kleinen Festbettfiltern einbauen lassen; oder aber daß sie sich besser in der Flüssigkeit verteilen lassen, wenn sie im Anschwemmfilterverfahren eingesetzt werden. Auch für den Fall einer nachträglichen Wirkstoffapplikation auf die Holzwolle aus einer lmprägnierlösung oder in der mit der Holzwolle zu behandelnden Flüssigkeit hat der Einsatz geschnittener Holzwolle große Vorteile. Auch für den Fall, daß die Produkte in sog. Filterbeuteln zum Beispiel zur passiven Flüssigkeitsbehandlung eingesetzt werden, hat der Einsatz geschnittener Produkte Vorteile, weil sie sich einfacher in die Beutel packen lassen.

Zur Anwendung der Produkte, vorzugsweise dann, wenn sie erfindungsgemäß als Komposit-Werkstoffe in der Form von Vliesen, Filzen, Papieren, Zellstoffen oder Halbzellstoffen eingesetzt werden sollen, oder dann, wenn in die Herstellung von derartigen Faserstoffen, bei denen die erfindungsgemäßen Produkte Bestandteil dieser Komposite sind, ein Verfahrensschritt zur Wasserbehandlung, vorzugsweise zur Abwasserbehandlung, integriert ist, kann es sehr vorteilhaft sein, die Wollen soweit zu zerkleinern, daß sie sich zu homogenen Suspensionen aufschlagen lassen, ohne zu verklumpen, Zöpfe zu bilden und sich um das Rührorgan zu wickeln.

Kurz geschnittene Produkte sind bevorzugt für den Einsatz zur Behandlung von Kaffee zur Geschmacksverbesserung geeignet, wenn sie bereits von vorneherein oder auch nachträglich vom Verbraucher dem Kaffeepulver zugesetzt werden, aus dem der Kaffee aufgebrüht wird. Derartige Einsatzmöglichkeiten wirkstoffhaltiger Filterpapiere werden in der deutschen Patentanmeldung 199 15 177.6 vom 3.4.1999 beschrieben.

Bei Bedarf können auch multifunktionale wirkstoffbeladene Produkte hergestellt werden. Es ist nämlich ohne Weiteres möglich, für diesen Zweck mit verschiedenen Wirkstoffen beladene Teile aus Pflanzen-, Flechten- und Tierorgangewebe mit unterschiedlichen Einzel- oder Mehrzweckfunktionen exakt zu mischen, um das gewünschte Filtrationsergebnis zu erzielen. In der Regel weniger bevorzugt, aber in einzelnen Fällen zum Erzielen einer multifunktionalen Wirkstoffunktion ist es ggf. vorteilhaft, ein Organgewebe mit mehr als einem Wirkstoff zu beladen, z.B. in einem ersten Schritt mit Eisenhydroxid und dann in einem zweiten Schritt mit Aktivkohlepulver.

Neben Einsatzmöglichkeiten zur Filtration und Geschmacksverbesserung eignen sich die Produkte auch als Wirkstoff-, Medikament-, Geschmacks-, Geschmacksverstärker- und Geruchsträger. Sie eignen sich daher auch zur Einarbeitung in die entsprechenden Lebensmittel und Futtermittel als Zusatzstoff, wenn sie zu einer hinreichend kleinpartikulären Applikationsform zermahlen werden.

Die Produkte auf der Rohstoffbasis Holzwolle sind auch geeignet für den Einsatz zur Trinkwasser- und Getränkeherstellung, wenn dafür Holzwollen verwendet werden, die keine Inhaltsstoffe abgeben, die toxisch sind und die unangenehm schmecken oder riechen, oder die von sich aus oder durch Wechselwirkung mit der Wirkstoffbeladung stark zur Farbstoffabgabe neigen. Dagegen können Holzwollen aus Hölzern, die angenehm duftende ätherische Öle abgeben insbesondere für die Teezubereitung von besonderem Vorteil sein.

Eben weil sich die Produkte für die Herstellung hochreaktiver Filterbetten eignen, können sie auch als Detektionsmittel in den entsprechenden Einrichtungen zur Untersuchung von Gasen, Erdreich und Gewässern eingesetzt werden.

Die bereits in den o.g. Veröffentlichungen mitgeteilten zahlreichen Methoden zur Beladung mit Wirkstoffprecursoren und Wirkstoffen lassen sich überraschend ohne Probleme auf die hier genannten Teile aus Pflanzen-, Flechten- und Tiergeweben als Rohstoffgrundlage für die Produkte erweitern.

Der überwiegende Anteil der Reaktionsmedien, in denen die Prozeßschritte zur Herstellung der Produkte durchgeführt werden, ist flüssig und/oder gasförmig. Dabei dienen die jeweiligen Gase und Flüssigkeiten nicht nur als Reaktionsmedium, sondern vielfach auch als das Medium, mit dem der eine oder beide Wirkstoffprecursoren in das Reaktionssystem eingebracht werden. Die erfindungsgemäßen Produkte allein auf der Rohstoffbasis von Pflanzen-, Flechten- und Tiergeweben oder als Komposite, die neben den erfindungsgemäßen Organgewebeteilen herkömmliche Wirkstoffträger, wie z.B. Zellstoff, enthalten können, können in einer oder mehrerer der Formen von Vliesen, Filzen, Papieren, Streifen, Zöpfen, Strängen, Knäueln, Bällen, Platten, unregelmäßig geformten Körpern, in eingehauster Form in Netzen, Beuteln, Käfigen, Kartuschen eingesetzt werden. Sie können aber auch zerkleinert in der Form einer Suspension als einzelne Vogelfedern und einzelne Daunen oder aus Federn und/oder Daunen zusammengefügten Bündeln oder Sträußen angewendet werden, beispielsweise in der Abwasserreinigung.

Wenn die erfindungsgemäßen Produkte als Komposite eingesetzt werden, die neben den erfindungsgemäßen Organgewebeteilen an und für sich bekannte Materialien und Wirkstoffe enthalten, gehören die Naturstoff-stämmigen Materialien zu den bevorzugten Co-Rohstoffkomponenten. Auch diese können mit Wirkstoffen und/oder Wirkstoff-Precursoren beladen sein. Vorzugsweise enthalten diese Materialien Komponenten aus den Gruppen der Zellstoffe, Halbzellstoffe, Strohzellstoffe, Reisstrohzellstoffe, Bambuszellstoffe und Bambusfasern, Baumwollzellstoffe, Espartozellstoffe, Bagassezellstoffe, Zellstoffe enthaltend Fasern aus Sisal, Flachs, Nessel, Baumwolle, Jute, Ramie, Hanf, Hochausbeutezellstoffe, Bisulfitzellstoffe, Neutralsulfit-Strohstoffe, Holzschliffe, gebleichte Holzschliffe, Braunschliffe, Chemischer Holzschliffe, Weißschliffe, Defibratorschliffe, Libby, Calciumalginatfaser-haltige Zellstoffe oder auch im Recycling aus Papieren, Pappen, Zellstoffen, Textilien und Papiersäcken gewonnene Faserstoffe, Baryt, Tonmineralien, Glimmer, Zeolith, Grafit.

Produkte als Gemisch aus erfindungsgemäßen Organgewebeteilen mit sonstigen Co-Rohstoffen in Kompositen eignen sich aber auch Co-Rohstoffkomponenten aus künstlichen Materialien, die ebenfalls mit Wirkstoff und/oder Wirkstoff-Precursor beladen sein können. Beispiele dafür sind Glasflocken, Glasbläschen, Glasfasern, Kunststoffbläschen, Kunststoffasern, Keramikfasern, Kohlenstoffasern, Graphitfasern, Zeolithe, lonenaustauscher-Harzte, Aktivkohlefasern, Ruß, Edelmetallfolien, Edelmetalldrähten.

Bezüglich der Wirkstoffe, die sich nach dem erfindungsgemäßen Verfahren auf den Organgewebeteilen als Imprägnierungen fixieren lassen, gibt es praktisch keine Begrenzung. Stoffe, die die folgenden Stoffeigenschaften enthalten, lassen sich in der erfindungsgemäßen Art und Weise als Imprägnierung auf dem Gewebe aufbringen:

Alle Stoffe, die sich als Ergebnis einer chemischen Reaktion zwischen mindestens zwei Reaktionsteilnehmern und/oder mindestens einer physikalischen Reaktion niederschlagen lassen aus einem Medium, das mindestens in einem der Materiezustände aus den Gruppen vorliegt: flüssige homogene Phasen, flüssige Emulsionen, flüssige Suspensionen, dichte Gasphasen, einfache Gasphasen, feste Phasen eignen sich als Wirkstoffprecursoren, mittels derer die Wirkstoffe auf und in den Geweben appliziert werden können.

Für den rein physikalischen Auftrag von Wirkstoffen eignen sich z.B. die allgemein bekannten Verfahren zur Abscheidung aus übersättigten Flüssigphasen, der Kondensation aus Gasphasen oder der Desublimation aus Gasphasen oder der Sorption aus flüssigen Phasen oder aus Gasphasen.

Überdies eignet sich die wollige Strukur der Rohstoffe für die Produkte, um allein auf mechanischem Weg Partikel und Fasern mit Wirkstoffeigenschaften darin zu fixieren, um den Produkten die gewünschten Eigenschaften aufzuprägen. Es ist aber auch möglich, zusätzliche Bindemittel einzusetzen, um die Bindung partikulärer oder faserförmiger Wirkstoffe in den Produkten zu verbessern.

Als Verfahren zur chemischen Abscheidung von Wirkstoffen bei der Herstellung der Produkte eignen sich alle Arten der chemischen Reaktionen wie z.B. Oxidation, Reduktion, Hydrolyse, plasmachemische Abscheidung, photochemische Abscheidung, elektrochemische Abscheidung, die in der Gegenwart fluider Phasensysteme möglich sind.

Die Herstellung der Produkte kann z.B. derart vorgenommen werden, daß in einem flüssigen und/oder gasförmigen Reaktionsmedium mindestens zwei Organgewebeteil-Fraktionen miteinander zur Reaktion gebracht werden, die mit unterschiedlichen Wirkstoffprecursoren imprägniert sind, wobei der Unterschied der Wirkstoffprecursoren dadurch gekennzeichnet ist, daß die im Reaktionsmedium zwischen den Wirkstoffprecursoren ablaufende Reaktion die Bildung mindestens eines Wirkstoffs zur Folge hat und daß die Wirkstoffprecursoren annähernd gleiche Löslichkeit bzw. annähernd gleichen Dampfdruck in dem Reaktionsmedium besitzen. Dieses Verfahren kann Vorteile gegenüber einer Beschichtung aus der Lösung im Batchverfahren haben, weil die Reaktionsbedingungen für alle Organgewebeteilchen konstant gehalten werden können. Es wird allerdings weniger vorgezogen, solche Wirkstoffprecursor einzusetzen, die unähnliche Dampfdrücke bzw. Löslichkeiten haben.

Im kontinuierlichen Prozeß zur Bildung der Wirkstoffbeladung auf den Organgewebeteilchen wird aber die Verfahrensvariante vorgezogen, bei der im flüssigen und/oder gasförmigen Reaktionsmedium mindestens eine Organgewebeteil-Fraktion mit mindestens einem im flüssigen oder gasförmigen Reaktionsmedium gelösten Wirkstoffprecursor zur Reaktion gebracht wird, wobei mindestens ein Wirkstoffprecursor auf der Organgewebeteil-Fraktion als Imprägnation und/oder Beschichtung vorliegt. Dieses Verfahren läßt sich allerdings auch so führen, daß die Reaktion im Batch-Prozeß möglich ist.

Im kontinuierlichen Prozeß zur Bildung der Wirkstoffbeladung auf den Organgewebeteilchen wird aber die Verfahrensvariante weniger vorgezogen, bei der im flüssigen und/oder gasförmigen Reaktionsmedium mindestens eine Organgewebeteil-Fraktion mit mindestens zwei im flüssigen oder gasförmigen Reaktionsmedium gelösten Wirkstoffprecursoren derart zur Reaktion gebracht werden, daß mindestens ein Wirkstoffprecursor als gelöste Komponente in einer Organgewebeteilsuspension vorgelegt wird und mindestens eine Wirkstoffprecursor als gelöste oder gasförmige Komponente zudosiert wird, wobei es zur Ausfällung und Beschichtung der Organgewebeteile mit Wirkstoff kommt. Auch dieses Verfahren läßt sich aber auch so führen, daß die Reaktion im Batch-Prozeß durchgeführt werden kann.

Werden die Reaktionen zur Beladung der Organgewebeteile mit Wirkstoff in Rührkesseln oder kontinuierlichen Reaktionssystemen mit suspendierten Organgewebeteilen vorgenommen, wird die Zerkleinerung der Wolle-ähnlichen Teile auf eine Faser- bzw Faserstranglänge bzw. Teilchengröße vorgezogen, bei der Verklumpung und Zopfbildung bzw. Blockierung von Rührorganen vermieden wird. Für die Bildung von Formteil-Produkten aus den erfindungsgemäßen Organgewebeteilen oder ihre Verwendung in Formteil-Produkten mit Kompositzusammensetzung, in denen die erfindungsgemäßen Organgewebeteile lediglich anteilig vorhanden sind, werden vorzugsweise aus vorzerkleinertem Rohstoff erzeugt, so daß die für die Verwendung der im Suspensionsverfahren erzeugten wirkstoffbeladenen zerkleinerten Organgewebeteile dort nicht nachteilig ist.

Es ist aber auch möglich, diese drei Prozeßvarianten so zu modifizieren, daß die Wirkstoffbeladung der Wollen bzw. Organgewebeteilchen im Festbett geschieht. Prinzipiell müssen die Wollen aus den Organgewebeteile hierfür nicht in zerkleinerter Form eingesetzt werden. Es ist aber ohne Weiteres möglich, auch hier zerkleinerte Organgewebeteile einzusetzen. Hierzu eignen sich alle Arten von Festbetten. Auch hier sind mehrere Varianten möglich.

Danach wird zunächst eine mit Wirkstoffprecursor beschichtete Organgewebeteilchen-Fraktion mit einer zweiten Organgewebeteilchen-Fraktion, die mit einem zweiten Wirkstoffprecursor beschichtet ist, der so gewählt ist, daß er mit dem Wirkstoffprecursor auf der ersten Fraktion unter geeigneten Reaktionsbedingungen den gewünschten Wirkstoff bilden kann, vermischt und die erhaltene Mischung als Organgewebeteilchen-Festbett angeordnet. Anschließend werden in dem Organgewebeteilchen-Festbett die geeigneten Reaktionsbedingungen hergestellt, die zur Umsetzung der Wirkstoffprecursoren zum gewünschten Wirkstoff hinreichend sind. Dies geschieht zum Beispiel durch geeignetes Einleiten von Wasser oder Anheben des Dampfdruckes durch Steigerung der Temperatur. Nachteil dieser Variante ist die aufwendige Prozedur der Vormischung der mit Wirkstoffprecursoren beschichteten Organgewebeteilchenfraktionen.

In der zweiten möglichen Variante werden die mit einem oder mehreren Wirkstoffprecursoren beschichteten Organgewebeteilchen im Festbett angeordnet und werden dann von einem fluiden Medium durchströmt, das einen darin vorzugsweise molekular verteilten Wirkstoffprecursor enthält, der mit einem oder mehreren auf den Organgewebeteilchen fixierten Wirkstoffprecursoren den gewünschten Wirkstoff bildet. Hierbei wird entweder eine weitgehende Unlöslichkeit bzw. geringer Dampfdruck der fixierten Wirkstoffprecursoren vorgezogen, die auf den damit beschichteten Organgewebeteilchen vorliegen, damit sie sich nicht von den Organgewebeteilchen ablösen. Alternativ kann aber auch der im fluiden Reaktionsmedium vorliegende Wirkstoffprecursor in einem hohen Überschuß eingesetzt werden, um das Fortspülen des Wirkstoffprecursors von den Organgewebeteilchen zu verhindern.

In der dritten möglichen Variante werden die Organgewebeteilchen im Festbett angeordnet, wobei das als fluide Phase vorliegende Medium mindestens zwei Wirkstoffprecursoren enthält, die darin vorzugsweise molekular verteilt sind. Danach wird das fluide Medium in dem Festbett in einen Zustand versetzt. bei dem die Reaktion der Wirkstoffprecursoren zu den Wirkstoffen im notwendigen Umfang einsetzt. Die gebildeten Wirkstoffe belegen dabei die Organgewebeteilchen.

Die genannten Prozeßvarianten zur Herstellung und auch zum Einsatz der einfachen Produkte und Komposit-Produkte können so eingesetzt werden, daß als fluides Reaktionsmedium ein Medium ausgewählt wird, dessen Behandlung mit Wirkstoffen belegten Organgewebeteilen oder diese enthaltenden Kompositen gewünscht wird. Vorzugsweise handelt es sich dabei um eine Flüssigphase, besonders bevorzugt eine wäßrige Phase, die mit den mit den Wirkstoffen belegten Organgewebeteilen oder diese enthaltenden Kompositen behandelt werden soll. Dabei kann es sich zum Beispiel um ein Abwasser oder um ein Getränk handeln. Alle der oben genannten Verfahrensvarianten zur Herstellung der Produkte und Komposit-Produkte können dazu eingesetzt werden.

Hier wird das oben bereits angeführte Problem der Produkt-Fertigung im Rührkessel-Batchverfahren beispielhaft erläutert und vertieft:

Beispielsweise bewirkt auch hier die Zugabe von Organgewebeteilen, die mit dem Wirkstoffprecursor Eisen-lll-chlorid-Lösung beladen sind, und die mit einer Soda-Lösung als zweitem Wirkstoffprecursor zu einer OrgangewebeteilSuspension umgesetzt wird, zu Beginn der Zugabe Wirkstoffprecursor-haltigen Organgewebes eine differente Wirkstoff-Fällungscharakteristik (Der gefällte Wirkstoff ist hier Eisen-III-hydroxid) gegenüber dem zuletzt zugegebenen Wirkstoffprecursor-haltigen Organgewebe. Die Fällungen unterscheiden sich deutlich hinsichtlich der Mikro-Topographie der Faserimprägnierung, der Wirkstoffaktivität sowie der mechanischen und hydraulischen Eigenschaften des daraus hergestellten Produktes. Ursachen liegen z.B. darin, daß das zu Beginn zugegebene Organgewebe mit einer wesentlich höher konzentrierten Soda-Lösung reagiert als das zuletzt zugegebene Organgewebe, das bei relativ stöchiometrischem Eisen-Soda-Verhältnis mit einer hochverdünnten Soda-Lösung reagiert. Zwar sind diese Probleme gemildert, wenn anstelle der Batch-Ansätze zu kontinuierlicher Fahrweise übergegangen werden kann, was allerdings nur bei Fertigung von Großchargen möglich ist.

Mit der erfindungsgemäßen Variante des konsequenten Eintrags der Wirkstoffprecursoren ausschließlich als Wirkstoffprecursor-imprägnierte Faserstoffe können Batch-Umsätze zu wirkstoff-imprägnierten Organgeweben mit der gleichen Homogenität erzeugt werden, wie sie mit den kontinuierlichen Verfahren möglich sind. Dies geschieht derart, daß beide Wirkstoffprecursoren vorzugsweise ausschließlich als Faserstoff-lmprägnation miteinander umgesetzt werden und zwar vorzugsweise im stöchiometrischen Verhältnis. Am Beispiel der Wirkstoffprecursoren Soda und Eisen-lll-chlorid wird dies erläutert: Mit Eisen-III-chlorid getränkte Organgewebeteilchen und mit Soda getränkte Organgewebeteilchen werden gleichzeitig im gleichen Mischungsverhältnis in einen Rührbehälter hineingegeben, in dem Wasser vorgelegt ist, und dort mit Wasser zu einer Fasersuspension verrührt. Das resultierende Produkt hat auch am Ende der Organgewebezugabe annähernd die gleiche Mikro-Topographie der Organgewebeimprägnierung wie an ihrem Anfang. Der im Verlauf der Umsetzung steigende Steinsalzgehalt der Organgewebeteilchensuspension hat offenbar keine gravierenden Einflüsse auf die Wirkstoffällung.

Unterschiede in der Löslichkeit der Wirkstoffprecursoren, die auf dem Organgewebe vorliegen und die miteinander unter Wirkstoffällung reagieren, können besondere gewünschte Unterschiede in den Eigenschaftsprofilen der Wirkstoffimprägnierung zur Folge haben. Das eben betrachtete relativ gleich schnell in Lösung gehende Wirkstoffprecursor-Paar Natriumcarbonat - Eisen-III-chlorid, erzeugt Organgewebetypen, die sich kaum in ihrer Wirkstoff-Verteilung in dem resultierenden Fasermaterial unterscheiden: Sie enthalten eine weitgehend ähnliche Wirkstoff-Verteilung in den Geweben. In Wirkstoffprecursor-Paaren mit differenter Löslichkeit, wie z.B. Calciumhydroxid - Eisen-lll-chlorid werden 2 Typen von Fasern gefunden: eine mit geringem Wirkstoffgehalt und eine mit hohem Wirkstoffgehalt, der im Wesentlichen in der Organgewebeperipherie vorliegt..

Einige Beispiele für weitere Wirkstoffprecursor-Paare, auf die das erfindungsgemäße Verfahren aber nicht beschränkt sein soll, sind
Natriumaluminat - Aluminiumtrichlorid,
Kaliumpermanganat - Mangan-II-chlorid,
Kaliumpermanganat - Ascorbinsäure,
Gold-lll-chlorid - Ascorbinsäure,
Zinksulfat - Calciumsulfid,
Natriumhuminat - Eisen-III-sulfat,
Natriumsilikat - Aluminiumchlorid,
Eisen-III-sulfat - Natriumsilikat,
Salzsäure - Natriumhuminat,
Natriumalginat - Calciumchlorid.

Als Medium, in dem die Umsetzungen mit Wirkstoffprecursor-Paar-beladenen Organgewebeteilchen ablaufen, eignet sich auch die Gasphase als Transport-Medium, wenn die Reagenzien, mit denen sich die Wirkstoffe ausfällen lassen und/oder aus denen sich die Wirkstoffe ausfällen lassen, in die gasförmige Phase überführen lassen. Mit Wirkstoffprecursor-Paaren wie z.B.
Ammoniumcarbonat - Eisen-lll-chlorid,
Ameisensäure - Natriumaluminat,
Titantetrachlorid - Wasser,
Zinntetrachlorid - Eisessig.

Prinzipiell eignen sich auch organische Phasen als Transportmedium für all jene Stoffe als Wirkstoffprecursor, die darin löslich sind. Bevorzugt vor diesen und den gasförmigen Transportmedien sind jedoch die wäßrigen Medien.

Die in den o.g Patentanmeldungen und Offenlegungsschriften genannten Wirkstoffe, hier noch einmal beispielhaft aufgezählt und ergänzt, lassen sich ohne Weiteres in den erfindungsgemäßen Produkten applizieren:
Organische Substanzen, darunter bevorzugt die Naturstoffe und ihre chemischen Modifikationen,
natürliche und künstliche Huminstoffe und ihre Salze,
in Wasser schwerlösliche oder unlösliche organische Säuren,
Polysaccharide und ihre Derivate einschließlich ihrer Salze,
Polynucleotide und ihre Salze,
Kartoffel- Mais- und Reisstärke,
Nucleinsäuren und ihre salzartigen Verbindungen,
Lignine, Ligninabbauprodukte, Ligninsulfonsäuren sowie Salze der genannten Lignine
Gerbstoffe und ihre Salze,
lipophile und oleophile Stoffe,
anorganische Sorbentien aus den Gruppen der Oxide, Sulfide, Selenide amalgamierbare Metalle,
zur Aufnahme von Wasserstoff fähige Platinmetalle,
organische Komplexbildner für anorganische Stoffe,
Silber und Silbersalze,
Platinmetalle und ihre Hydride,
Gold als Metallisierung, Kolloid und Blattgold,
Lanthanide, Actinide, ihre Salze und Verbindungen,
Schwermetalle, ihre Salze und Verbindungen,
Porphine und ihre Verbindungen,
schwerlösliche Hydroxide, Oxide und Mischoxide,
Oxide und/oder Hydroxide von Eisen, Aluminium und Mangan und ihre Mischphasen,
durch Hydrolyse von in wäßrigen und/oder organischen Lösungsmitteln gelösten hydrolyseempfindlichen Metallverbindungen ausgefällten sauerstoffhaltigen Metallverbindungen
schwerlösliche Sulfide und Mischsulfide,
Flockmittel, quellfähige Polymere und Polyelektrolyte,
Alginsäure, Alginate und Chitosane,
Sauerstoff enthaltende Verbindungen des Eisens und des Mangans photolytisch aktivierbare organische und anorganische Stoffe,
galvanisch oder chemisch gefällte Metallisierungen.

Mit den daraus hergestellten Produkten und Komposit-Produkten werden bevorzugt die im Folgenden genannten Stoffe und Elemente aus verschiedenen Medien, z.B. aus dem Wasser, aus wäßrigen Lösungen, aus flüssigen Stoffen zur Aufnahme in den menschlichen Körper oder auch aus der Luft und aus anderen Gasen abgeschieden: Viele dieser Verbindungen, Partikel und Stoffe werden bereits in den o.g. Patentanmeldungen und Offenlegungsschriften genannt. Diese Zielstoffe lassen sich mit den erfindungsgemäßen wirkstoffhaltigen Gewebematerialien und diese enthaltenden Kompositen in verschiedenen Medien, z.B. Wasser, wäßrigen Lösungen, nicht-wäßrigen Flüssigkeiten und Lösungen, pulverförmigen und stückigen Produkten, Lebensmitteln, und Getränken, Pharmaka, Gasen, Rauchgasen, und Luft detektieren. Im Folgenden werden Beispiele jener Zielstoffe gegeben, die auch mit den erfindungsgemäßen wirkstoffhaltigen Gewebematerialien aufgenommen und/oder zersetzt und/oder detektiert werden können:
Organische Stoffe, darunter lipophile Stoffe, Fettsäuren und ihre Salze, Phenole, aromatische Amine, stickstoffhaltige Heterocyclen, Alkaloide, Gerbstoffe, Huminstoffe, aromatische und aliphatische Kohlenwasserstoffe, halogenorganische Verbindungen;
Anorganische Stoffe, darunter reduzierte Schwefelverbindungen, z.B. Schwefelwasserstoff, seine Salze und seine organischen Derivate (Mercaptane, Mercaptide, Disulfide), Schwefelkohlenstoff, Thiocyanate, oxidierte Schwefelverbindungen, z.B. Sulfate,
Elemente, z.B. Radon, Quecksilber, Jod, Chlor und Brom,
als lonen und Komplexe vorliegende Metalle, Metalloide, und Nichtmetalle z.B. Erdalkalien, Aluminium, Blei, Kupfer, Cadmium, Chrom, Quecksilber, Nickel, Arsen, Antimon, Wismut und Selen, Jodid, sowie auch Radionuklide und Edelmetalle, Kohlenmonoxid, Kohlenoxidsulfid.

Im Laufe der Untersuchungen zur Anwendung und Wirksamkeit der Produkte, mit denen die hier dokumentierten Ergebnisse erzielt wurden, konnte überdies ihre besondere Eignung zur Sorption und damit Detektion von organischen Verbindungen bestätigt werden. Insbesondere Produkte, die sauerstoffhaltige Eisenverbindungen, wie über sauerstoffhaltige Reste, z.B. Carboxyl-, Hydroxyl-und/oder Carbonylgruppen gebundenes Eisen, die insbesondere in Bindemittelbestandteilen, wie Lignin, auftreten, bzw. oxidisch gebundenes Eisen enthielten, eigneten sich zur Sorption an und für sich mit dem herkömmlichen Sorbens Aktivkohle schwer sorbierbarer Stoffe. Darunter fallen vor allem Stoffe, wie
- carbocyclische und heterocyclische einkernige und mehrkernige Aromaten, die mit Heterofunktionen wie -OH, -SH, -SeH, -NH₂, -COOH substituiert sind, darunter z.B. die Gerbstoffe und die Huminstoffe,
- Amine und ihre substituierten Derivate,
- Imine und Nitrile,
- Diketone,
- stickstoffhaltige Heteroaromaten, wie z.B. Pyridin, Chinolin, Dibenzofuran, Phenantrolin, Acridin, Carbazol, Dihydroacridin, Azapyren, Iminophenanthren, Thebenidinon, Phenanthridon, Indolochinolin, Triazinderivate,
- stickstoffhaltige aromatische und nichtaromatische Heterocyclen, wie z.B. die Alkaloide und die Pyrrol- und Hydropyrrol-haltigen Heterocyclen
- Schwefel- oder Sauerstoff-haltige aromatische Heterocyclen, z.B. Benzoxanthen, Dibenzofuran, Xanthen, Dibenzothiophen, Dibenzodioxin.

Diese Stoffe werden bevorzugt mittels der erfindungsgemäß hergestellten Produkte aus wäßrigen und gasförmigen Medien entfernt, die schwermetallhaltige Wirkstoffe, insbesondere Eisen in Oxid- und/oder Hydroxidform, gebunden als lmprägnation, enthalten. Diese Wirksamkeit bezieht sich auch auf die Alkaloide, die bei Bedarf vorzugsweise aus deren wäßrigen Lösungen bei der Zubereitung und danach (Kaffee, Tee) und auch noch nach ihrer Aufnahme (Kautabak, Schnupftabak) entfernt werden können. Alkaloidhaltige Pflanzen werden als Grundlage für die Zubereitung von Genußmitteln geschätzt. Sie können jedoch abhängig machen und besitzen teilweise erhebliche Toxizität. So wird ihr Gehalt durch Maßnahmen wie z.B. Extraktion mit Lösungsmitteln oder überkritische Gasphasen gemindert. Dem Verbraucher ist es mit den erfindungsgemäßen Produkten möglich, den Alkaloidgehalt durch reaktive Filtration oder Sorption zu reduzieren. In Frage kommen dafür alkaloidhaltige Zubereitungen bzw. Getränke aus den Pflanzenfamilien, zu denen insbesondere die Pflanzen Coffea arabica (Kaffee-Getränke), Thea sinensis, Camellia sinensis (Tee-Getränke), llex paraguayensis (Matetee), Theobroma cacao (Kakao-Getränke), Cola nitida und Cola acuminata (Cola-Getränke), Paullina cupana (Guarana-Getränke), Nicotiana tabacum (Tabak) und Cannabis sativa (Hanf) gehören, die für die Zubereitung von Getränken, Rauchwaren, Kauwaren und Schnupfwaren im Gebrauch sind.

Herkömmliche mit derartigen Eisenverbindungen als Wirkstoffe beladene Zellstoffe und Papiere zeigen die Eigenschaften der Alkaloidsorption. Diese Wirksamkeit konnte hier aber auch bei den mit Eisenverbindungen beladenen Produkten festgestellt werden. Das gilt für Luft- und Wasserfilter enthaltend die erfindungsgemäßen Gewebe, die Eisenverbindungen enthalten zur Alkaloidreduktion im Filtrat bzw. in der filtrierten Luft. Das Gleiche gilt für Produkte zur Detektion und Kollektion enthaltend Organgewebe, die Eisenverbindungen enthalten zur Bestimmung von Alkaloiden. Bezogen auf Produkte, die Eisenverbindungen enthalten, gilt dies auch für für Detektionsund Kollektionseinrichtungen sowie Filtermaterialien für Reduktion, Analytik und Probenahme von stickstoffhaltigen Aromaten, insbesondere stickstoffhaltige Heterocyclen und Aromaten mit Stickstoffunktionen. Das geschieht ebenfalls mit den erfindungsgemäß präparierten Produkten.

Ganz ähnlich verfahren werden kann mit den Tabakrauchfiltern, die zur Verminderung des Schadstoffgehalts in dem vom Raucher eingezogenen Tabakrauch dienen sollen. Diese können ebenfalls die erfindungsgemäßen Produkte enthalten. Hier ist die Wirkstoffkomponente vorzugsweise in fester Form enthalten. Dabei handelt es sich vorzugsweise ebenfalls um eine oder mehrere Verbindungen des dreiwertigen Eisens mit Sauerstoff, die vorzugsweise durch Fällung in feiner Verteilung auf die Faser gebracht wird.

Die Alkaloide lassen sich mittels der erfindungsgemäßen Produkte oder auch herkömmlich hergestellten Fasermaterialien auch aus überwiegend gasförmigen und ggf. kondensierenden Phasen (Zigaretten und ähnliche Rauchwaren) entfernen und eignen sich daher vorzugsweise für Zigaretten, Zigarettenspitzen und ähnliche Anwendungen, wie z.B. Wasserpfeifeneinsätze. Bei Zusatz der Produkte zu den alkaloidhaltigen Substraten (z.B. Kaffeebohnen, Kaffeepulver, Instantkaffee, gemahlener Tabak, Tabak in Zigaretten, Zigarillos, Zigarren und sonstigen Rauchwaren, darunter auch Hanfprodukten, Zigarettenfiltern, Filtern an/in Rauchhilfen, wie z.B. in Pfeifen und Zigarettenspitzen, Kautabak und Schnupftabak) ist in vielen Fällen die stark wirkstoffhaltige zerkleinerte Organgewebeform das bevorzugte Produkt. Vorzugsweise als Zusätze zu Kaffeepulver, Instantkaffee, Kau- und Schnupftabak können gefällte, gemahlene oder geschrotene bis staubfeine Produkte, die Sauerstoffverbindungen des dreiwertigen Eisens und Mangans, vorzugsweise Eisenhydroxid und/oder Eisenoxidhydrate enthalten, genutzt werden. Diese können auch durch Mahlen der entsprechend imprägnierten Organgewebe gewonnen werden. Sie können aber auch durch direkte Fällung mit oder ohne Partikelzusätze, Filtration, Trocknen des Filterrückstandes und Mahlen desselben gewonnen werden; es hat sich aber gezeigt, daß diese Produkte geringere Aktivität haben, als diejenigen auf der Basis wirkstoffhaltiger Organgewebe.

Die Anwendung der Produkte in Rauchgasfiltern, z.B. den Zigarettenfiltern, mit einem oder mehreren Wirkstoffen hat über den Vorteil der Alkaloidbindung (hier das Nicotin) hinaus den Vorteil, daß auch die wegen ihrer hochgradigen Karzinogenität besonders gefährlichen Zigaretten-Rauchgas-Inhaltsstoffe, nämlich die aromatischen Amine, darunter insbesondere das β-Naphthylamin, das Cadmium sowie das radioaktive Polonium und im Zigarettenrauch abgereichert werden können.

Passivraucher können erheblich durch die Tabakrauch-Inhaltsstoffe betroffen sein. Aus den gemäß dem erfindungsgemäßen Verfahren mit Wirkstoffen beladenen Organgeweben können auch Produkte in der Form von Schutzmasken für Passivraucher hergestellt werden. Diese sind vorzugsweise als Komposit-Produkte konzipiert. Sie enthalten vorzugsweise sauerstoffhaltige Eisenverbindungen und aktiven Kohlenstoff als Wirkstoffe. In Ergänzung zu den bekannten Schutzmasken, wie sie z.B. gemäß der deutschen Patentanmeldung 199 50 980.8 hergestellt werden, eignen sich diese Produkte aus geformtem imprägnierten Organgeweben ebenfalls hervorragend zur Abscheidung der Schadstoffe aus verkehrsbedingten Rauchgasimmissionen. Organgewebe aus feiner Holzwolle und/oder Flechtenhäcksel und/oder Schwammhäcksel und/oder Sphagnumhäcksel und/oder Torfhäcksel sind hierfür geeignet. Die wirkstoffbeladenen erfindungsgemäßen Gewebe der Produkte können durchaus auch zusammen mit den bekannten denaturierten wirkstoffbeladenen Faser- und Partikelmaterialien wie z.B. Papierwolle, Zellstoff, Zellstoffasern, Holzschliff, Glimmer und Glasfaser als Komposit-Produkt eingesetzt werden.

Wenn sie hinreichend kleingehäckselt sind, lassen sich insbesondere die Organgewebe auf der Basis einer oder mehrerer der Organgewebe aus den Gruppen zerkleinerte Holzwolle vorzugsweise mit einer Dicke unter 0,05 mm und einer Breite unter 0,5 mm, zerkleinerte Sphagnum-Moose, zerkleinerter Torf, zerkleinerte Flechten und zerkleinerte Schwämme zu Papier- und Zellstoff-ähnlichen Produkten umsetzen. Das gelingt besonders dann sehr gut, wenn den Organgeweben noch ein Anteil herkömmlicher Faserstoffe, vorzugsweise aus einer oder mehrerer der Gruppen Baumwolle, langfaserige Holzschliffe oder Zellstoffe zugesetzt werden. Die Herstellung derartiger mit Fasermaterialien stabilisierter Produktkomposite kann mit sehr reichhaltiger Variation durchgeführt werden, wie die Beispiele 4 bis 6 zeigen, auf die aber die Erfindung nicht beschränkt sein soll. Die Produktion von Papier- oder Zellstoffblättern als Produkte, aus dem wirkstoffhaltigen Organgewebe oder unter Mitverwendung von wirkstoffhaltigen Organgeweben können auf herkömmlichen Papier- und Zellstoffmaschinen gefertigt werden, wenn die erfindungsgemäßen Wirkstoff enthaltenden Gewebe vor oder nach der Wirkstoffbeladung hinreichend zerkleinert wurden.

Es ist auch möglich, die auf diesen Maschinen erzeugten Papier- oder Zellstoffblätter oder Zellstoffflocken, die aus den Organgewebeteilen oder unter Mitverwendung der Organgewebeteile als Rohstoff für das erfindungsgemäße Produkt gefertigt wurden, nachträglich in an und für sich bekannten Verfahren zum Tränken mit Wirkstoffprecursoren bzw. Wirkstoffen zu beladen, die dann in Folgeschritten zu den Produkten umgesetzt bzw. konditioniert werden können.

Unabhängig voneinander lassen sich die Organgewebeteile mit verschiedenen Wirkstoffen oder auch Wirkstoffprecursoren beladen, die dann zu Komposit-Produkten zusammengesetzt werden, die unterschiedliche Wirkstoffe nebeneinander enthalten können, und somit unterschiedliche Aufgaben erfüllen können.

Die an urbanen und verkehrsreichen Lokalitäten vorkommenden Immissionen gehen weit über das Schadstoffspektrum des Tabakrauchs hinaus. Hier treten zusätzlich die kanzerogenen Komponenten der Nitroaromaten und Nitrokresole (Dieselelrauchgas und Smog), des Peroxyacetylnitrats (Smog), der Stickoxide (NO und NO₂ aus Rauchgasen und Smog), des Ozons (Smog), der Halogenorganischen Verbindungen (aus Rauchgasen und Smog), der polycyclischen aromatischen Kohlenwasserstoffe (aus Rauchgasen), des Antimons (aus den Reibbelags-Emissionen des Bremsen und Kupplungen), des Bleis (aus Rauchgasen), des Zinks (aus Reifenabrieb) und des Rußes (aus Dieselrauchgas und Reifenabrieb) hinzu.

Diesem Wirkungsspektrum entsprechend lassen sich die erfindungsgemäßen Produkte nicht nur zum direkten Personenschutz einsetzen, sondern allgemein für Filter in Kraftfahrzeugen, häuslichen, gewerblichen und technischen Einrichtungen zur Luft- und Gasfiltration mit Anwendungsbereichen, wie sie z.B. näher in der deutschen Patentanmeldung 199 50 980.8 beschrieben werden.

Viele der oben genannten Stoffe und Stoffgruppen, die aus Flüssigkeit und/oder Gas mit den Produkten entfernt werden können, sind bereits in den genannten Patentanmeldungen genannt. Im Übrigen lassen sich Zielstoffe, die dort bereits genannt sind und hier nur als Stoffklasse benannt werden, ebenfalls mit den Produkten entfernen.

Besonders wirkungsvoll lassen sich die Produkte in der Grundwasserreinigung einsetzen, wenn sie als sog. "Reaktive Wand" eingesetzt werden, wie dies bereits in den oben genannten Veröffentlichungen für ähnliche Sorptionsmittel beschrieben worden ist. Im Rahmen dieser Erfindung wurde nun gefunden, daß sich auch die erfindungsgemäßen Produkte ähnlich den bereits bekannten Sorptionsmitteln besonders gut zur Bindung von ein- und mehrkernigen Phenolen, ein- und mehrkernigen Phenolcarbonsäuren und organischen Stickstoffderivaten, darunter besonders bevorzugt zur Bindung der aromatischen ein- und mehrkernigen Heterocyclen und die aromatischen ein-und mehrkernigen Amine, eignen.

Unter Nutzung des Produkt-Herstellungsprozesses als Wasserreinigungsverfahren lassen sich ebenso viele Stoffe aus dem zu reinigenden Wasser entfernen. Neben den oben genannten Stoffklassen, die mit den Produkten aus dem Wasser entfernt werden können, lassen sich hiernach auch die ungelösten Stoffe aus dem Wasser entfernen, wie z.B. Kolloide, lebende Zellen, Partikel, emulgierte Öle und Fette.

Neben den genannten Verfahren zur Wasserreinigung lassen sich die Produkte als Mittel für sog. Passivsammler zur Detektion von Wasserinhaltsstoffen, Milieuparametern, Wasserströmungsparametern und Wasserfließrichtung nutzen; aber auch zur kontinuierlichen Probenahme von gasförmigen, flüssigen, Staub und/oder stückiges Material enthaltenden Lebensmitteln, Erzeugnissen, Stoffen, Zwischenerzeugnissen, Wirtschaftsgütern und Rohstoffen. Derartige Anwendungen werden in der deutschen Patentanmeldung 199 47 635.7 detailliert beschrieben. Hierbei wird die Reaktivität der Wirkstoffe in den Produkten als Sorbenten oder Desorbenten zur Detektion der Zielstoffe genutzt. Beispiele für Zielstoffe sind bereits weiter oben aufgelistet worden.

### Beispiel 1: Komposit-Produkt auf Basis von Holzwolle

5 g Furnierfolie aus nordischem Birkenholz mit den Abmessungen 200 mm x 200 mm x 0,1 mm wird beidseitig mit einer Lösung getränkt, enthaltend die Wirkstoffmengen 5 g Natriumalginat und 5 g Carboxymethylcellulose in 1 l Wasser. Anschließend wird zur Gewichtskonstanz bei 60 °C getrocknet. Gravimetrisch wird eine Wirkstoffaufnahme in die Furnierfolie von 1 Gewichts-Prozent ermittelt. Die gelartigen Derivate der Wirkstoffe Alginsäure und Carboxymethylcellulose begünstigen die Abscheidung von Trübstoffen.

5 g Furnierfolie aus nordischem Birkenholz mit den Abmessungen 200 mm x 200 mm x 0,1 mm wird beidseitig mit einer verdünnten Eisen-III-chloridlösung getränkt. Anschließend wird zur Gewichtskonstanz bei 60 °C getrocknet. Gravimetrisch wird eine Wirkstoffaufnahme in die Furnierfolie von 7 Gewichts-Prozent ermittelt.

Anschließend werden die wirkstoffbeladenen Furnierfolien aneinandergelegt und mittels 10 cm breiter Doppelwalzen-Schneidevorrichtung derart zu Holzwolle zerschnitten, daß die Späne der Holzwolle eine Breite von 1 mm aufweisen. Die Holzspanstreifen werden als Bündel in eine verdünnte Magnesiumhydrogencarbonat-Lösung eingetaucht, 3 min darin belassen, herausgenommen und bei 80 °C getrocknet. Dabei wird das als Imprägnation des Holzes vorliegende Eisen-lll-chlorid als Eisen-III-hydroxid ausgefällt. Die quellfähigen gelartigen Derivate der Wirkstoffe Alginsäure und Carboxymethylcellulose begünstigen die Abscheidung von Trübstoffen, der Wirkstoff Eisen-lll-hydroxid begünstigt die Abscheidung von gelösten Metalloiden und Schwermetallen.

Mittels Papierschere werden die jeweils erhaltenen 20 cm langen Stränge aus Wirkstoff-haltiger Holzwolle auf 10 cm Länge gekürzt. Die nunmehr die Wirkstoffe Eisen-lll-hydroxid, Alginat und Carboxymethylcellulose enthaltende Holzwolle wird nun für die Herstellung von Festbettfiltern benutzt.
a) Etwa 10 g dieser Holzwollestränge werden von Hand gleichmäßig zusammengeknäuelt und in eine Kartusche von 10 cm Länge und 5 cm Innendurchmesser mit quadratischem Querschnitt entsprechend 50 cm³ wirksamem Festbettfilter-Volumen als Festbettfilter eingeführt. Die Kartusche wird auf beiden Seiten mit Edelstahldrahtgewebe mit 0,5 mm lichter Maschenweite verschlossen. Das derart erhaltene Festbettfilter wird eingesetzt zur Abscheidung feinen Aktivkohletrübstoffs aus Wasser. Insgesamt werden 10 I gefärbtes Trübstoff-haltiges Wasser, enthaltend 10 mg/l Aktivkohlepulver mit einem Korndurchmesser von <10 µm, 2 mg/l Bleinitrat und 2 mg/l Arsen-lll-oxid und 2 mg/l Mimosa-Gerbstoff mit einer Durchsatzleistung von 10 Filtervolumen pro Stunde durchgesetzt. Das erhaltene Filtrat ist farblos und klar; Blei und Arsen sind im Filtrat in einer Konzentration <5 µg/l (unter der Nachweisgrenze) vorhanden.
b) Etwa 23 g dieser Holzwollestränge werden von Hand gebündelt und in Längsrichtung in eine U-förmige Vorrichtung eingelegt, die einseitig offene Vorrichtung an der Seite verschlossen, so daß eine Kartusche von 10 cm Länge und 5 cm Innendurchmesser mit quadratischem Querschnitt entsprechend 50 cm³ wirksamem Festbettfilter-Volumen entsteht. Die Kartusche wird auf beiden Seiten mit Edelstahldrahtgewebe mit 0,5 mm lichter Maschenweite verschlossen. Das derart erhaltene Festbettfilter wird eingesetzt zur Abscheidung feinen Aktivkohletrübstoffs aus Wasser. Insgesamt werden 10 I Trübstoff-haltiges Wasser, enthaltend 10 mg/l Aktivkohlepulver mit einem Korndurchmesser von <10 µm, 2 mg/l Bleinitrat und 2 mg/l Arsen-lll-oxid mit einer Durchsatzleistung von 5 Filtervolumen pro Stunde durchgesetzt. Das erhaltene Filtrat ist klar; Blei und Arsen sind im Filtrat in einer Konzentration <5 µg/l (Nachweisgrenze) vorhanden.

Der weitere Verlauf der Versuche zeigte, daß das Festbettfilter a) eine höhere Trübstoffaufnahme-Kapazität hatte, während das Festbettfilter b) eine höhere Blei- und Arsenaufnahme-Kapazität hatte.

### Beispiel 2: Komposit-Produkt auf Basis von Flechten und Holzwolle

a) 5 g sogenanntes Isländisches Moos, das mit dem Küchenkräuter-Wiegemesser zu Teilchen mit Abmessungen von etwa 10 mm x 10 mm x 10 mm geschnitten wird, wird mit einer Lösung getränkt, enthaltend die Wirkstoffmengen 10 g Natriumstearat in 500 ml Wasser. Anschließend wird zur Gewichtskonstanz bei 60 °C getrocknet. Anschließend wird mit wäßriger Aluminiumchloridlösung umgesetzt. Dabei hydrophobieren sich die Flechten. Gravimetrisch wird eine Wirkstoffaufnahme in die Flechten von 2 GewichtsProzent ermittelt. Die lipophile Aluminiumseife begünstigt die Abscheidung von Ölen.
b) 5 g Furnierfolie aus nordischem Birkenholz mit den Abmessungen 200 mm x 200 mm x 0,1 mm wird beidseitig mit einer verdünnten Mangan-II-chloridlösung getränkt. Anschließend wird zur Gewichtskonstanz bei 60 °C getrocknet. Gravimetrisch wird eine Wirkstoffaufnahme in die Furnierfolie von 7 Gewichts-Prozent ermittelt.
c) 5 g Furnierfolie aus nordischem Birkenholz mit den Abmessungen 200 mm x 200 mm x 0,1 mm wird beidseitig mit einer Lösung getränkt, enthaltend die Wirkstoffmengen 5 g Natriumalginat und 5 g Carboxymethylcellulose in 1 l Wasser. Anschließend wird zur Gewichtskonstanz bei 60 °C getrocknet. Gravimetrisch wird eine Wirkstoffaufnahme in die Furnierfolie von 1 Gewichts-Prozent ermittelt. Die gelartigen Derivate der Wirkstoffe Alginsäure und Carboxymethylcellulose begünstigen die Abscheidung von Trübstoffen.

Die Holzwolle c) wird in eine verdünnte Magnesiumhydrogencarbonat-Lösung eingetaucht, 3 min darin belassen, herausgenommen und bei 80 °C getrocknet.

Die Holzwolle b) wird in eine verdünnte Kaliumpermanganat-Lösung eingetaucht, bis zum Verschwinden der Violett-Färbung darin belassen, dann herausgenommen und bei 80 °C getrocknet.

Die quellfähigen gelartigen Derivate der Wirkstoffe Alginsäure und Carboxymethylcellulose begünstigen die Abscheidung von Trübstoffen, der Wirkstoff Mangan-III- und Mangan-IV-Oxide und -Hydroxide begünstigt die Abscheidung von gelösten Metalloiden und Schwermetallen. Die hydrophoben Flechten dienen der Aufnahme von Öltröpfchen.

Die drei Teilchensorten werden nicht miteinander vermengt. Die nunmehr die Wirkstoffe Eisen-lll-hydroxid, Aluminiumstearat, Alginat und Carboxymethylcellulose enthaltenden Gewebe-Wollen werden nun für die Herstellung eines segmentierten Festbettfilters für die Reinigung eines Abwasserstroms benutzt, der emulgiertes Kohlenwasserstoff-Öl, Bronzepartikel, gelöstes Zinn und Kupfer enthält.

Etwa 50 g der eisenhaltigen Holzwolle werden zuunterst in eine viereckige Glassäule gestopft als Filter zur Entfernung von gelöstem Zinn und Kupfer. Darüber wird etwa 50 g der Alginat-beladenen Holzwolle eingestopft als Sorbens für die Metallpartikel. Als oberste Lage wird das mit Aluminiumstearat imprägnierte Flechtengewebe in einer Menge von ca. 50 g eingestopft als Sorbens für die emulgierten Öle. Das Abwasser wird von oben nach unten durch das Filter geleitet. Insgesamt werden 10 l Trübstoff-haltiges Wasser, enthaltend 5 mg/l Öl, 15 mg/l Metallpartikel und ein 2 mg/l Schwermetalle mit einer Durchsatzleistung von 10 Filtervolumen pro Stunde durchgesetzt. Das erhaltene Filtrat ist klar und nahezu geruchlos.
Das erhaltene Filtrat ist klar; Zinn und Kupfer sind aus dem Filtrat zu über 98 % entfernt worden.

### Beispiel 3: Kompositprodukt auf Naturschwamm-Basis

5 g Natur-Badeschwamm, der mittels Messer zu Teilchen mit Abmessungen von etwa 10 mm x 10 mm x 10 mm geschnitten wird, wird mit einer Lösung getränkt, enthaltend die Saccharidderivatmengen 5 g Natriumalginat und 5 g Carboxymethylcellulose in 1 I Wasser. Anschließend wird zur Gewichtskonstanz bei 60 °C getrocknet. Es wird eine Wirkstoffaufnahme in die Schwammteile von 3 Gewichts-Prozent ermittelt. Die gelartigen Derivate der Wirkstoffe Alginsäure und Carboxymethylcellulose begünstigen die Abscheidung von Trübstoffen.

5 g Natur-Badeschwamm, der der mittels Messer zu Teilchen mit Abmessungen von etwa 10 mm x 10 mm x 10 mm geschnitten wird, wird mit einer konzentrierten Eisen-III-chloridlösung getränkt. Anschließend wird die anhaftende Feuchtigkeit weitgehend in der Zentrifuge abgeschleudert. Analytisch wird eine Wirkstoffaufnahme in die Schwammteilchen von 25 Gewichts-Prozent Eisen-III-Chlorid ermittelt. Die Schwammteilchen werden in eine verdünnte Sodalösung eingetaucht, 3 min darin belassen, herausgenommen und bei 80 °C getrocknet. Dabei wird das als Imprägnation des Holzes vorliegende Eisen-III-chlorid als Eisen-lll-hydroxid ausgefällt.

5 g Natur-Badeschwamm, der der mittels Messer zu Teilchen mit Abmessungen von etwa 10 mm x 10 mm x 10 mm geschnitten wird, wird mit einer 5 prozentigen schwefelsauren Cer-IV-sulfatlösung getränkt. Anschließend wird die anhaftende Feuchtigkeit weitgehend in der Zentrifuge abgeschleudert, und feucht mittels Sodalösung hydrolysiert, zwei mal mit Wasser gewaschen und getrocknet. Analytisch wird eine Wirkstoffaufnahme in die Schwammteilchen von 10 Gewichts-Prozent Ceroxiden ermittelt. Die Cerimprägnierte Wolle dient der Hydrolyse von Schwefelkohlenstoff.

Die Teilchensorten werden nicht miteinander vermengt. Die nunmehr mit Wirkstoffen beladenen Natur-Badeschwamm-Teilchen werden für die Herstellung von Festbettfiltern benutzt.

Etwa 30 g der Eisen-beladenen Schwammteilchen werden von Hand gleichmäßig in eine Kartusche von 10 cm Länge und 4 cm Innendurchmesser mit kreisförmigem Querschnitt mit etwa 30 cm³ wirksamem Festbettfilter-Volumen als Festbettfilter eingeführt. Die Kartusche wird auf beiden Seiten mit Edelstahldrahtgewebe mit 0,5 mm lichter Maschenweite verschlossen.

Ebenso wird mit den Saccharidderivat-beladenen Schwammteilchen und den mit den Cer-Sauerstoff-Komponenten beladenen Schwammteilchen verfahren. Zur Filtration werden die einzelnen Festbettilter in der folgenden Reihenfolge hintereinander geschaltet: Saccharidfilter - Cerfilter - Eisenfilter.

Die derart erhaltene Festbettfilterstrecke wird eingesetzt zur Abscheidung feinen Aktivkohle- und Elementarschwefel-Trübstoffs und geringe Mengen gelösten Schwefelkohlenstoff enthaltenden Desorbats aus einer Abluftreinigungsanlage zur Viskoseabluftreinigung. Insgesamt werden 10 l Trübstoff-haltiges Wasser, enthaltend 2 mg/l Trübstoff, 0,1 mg/l Schwefelwasserstoff und 1 mg/l Schwefelkohlenstoff mit einer Durchsatzleistung von 10 Filtervolumen pro Stunde durchgesetzt. Das erhaltene Filtrat ist klar und nahezu geruchlos.

### Beispiel 4: Vliesähnliches Kompositprodukt auf Basis Holzwolle, Moos, Flechten und Zellstoff

Ein Gemisch, enthaltend
1 Gewichtsteil gesiebte Holzwollehäcksel, Wollfaserdicke 0,02 mm, Wollfaserbreite 0,3 mm und Wollfaserlänge kleiner 30 mm,
1 Gewichtsteil Sphagnummoos gehäckselt, getrocknet und gesiebt mit einer Korngröße kleiner 10 mm,
1 Gewichtsteil "Isländisches Moos" gehäckselt getrocknet und gesiebt mit einer Korngröße kleiner 5 mm,
0,5 Gewichtsteile langfaserigen Zellstoff,
wird 20 min lang in 100 Teilen einer 30-prozentigen Eisen-lll-chlorid-Lösung mittels Dissolver aufgeschlagen. Anschließend wird der Brei zentrifugiert und der erhaltene feste Rückstand zerpflückt und in kleinen Portionen in 1000 Teilen einer verdünnten Sodalösung mittels Dissolver aufgeschlagen. Anschließend wird die erhaltene Suspension auf ein planes Sieb geschüttet und abgesaugt. Das erhaltene feuchte Blatt wird im angepreßten Zustand bei 60 °C getrocknet. Es wird ein braunes papierähnliches Vlies erhalten, das etwa 15 % Eisen-III-hydroxid enthält und von hinreichender Wasserfestigkeit ist. Das Wirkstoffgewebekomposit-Vlies eignet sich zur Schwermetall-, Selen- und Arsenentfernung aus Wasser. Nach Behandlung mit Silbernitrat eignet es sich auch für den Langzeiteinsatz.

### Beispiel 5: Vliesähnliches Kompositprodukt auf Basis Holzwolle, Moos, Flechten und Zellstoff

Ein Gemisch, enthaltend
1 Gewichtsteil gesiebtes Holzwollehäcksel, Wollfaserdicke 0,02 mm, Wollfaserbreite 0,3 mm und Wollfaserlänge kleiner 15 mm,
1 Gewichtsteil Sphagnummoos gehäckselt, getrocknet und gesiebt mit einer Korngröße kleiner 10 mm,
werden 20 min lang in 50 Teilen einer 30-prozentigen Eisen-lll-chlorid-Lösung mittels Dissolver aufgeschlagen. Anschließend wird der Brei zentrifugiert und der erhaltene feste Rückstand zerpflückt und in kleinen Portionen in 500 Teilen einer verdünnten Sodalösung mittels Dissolver aufgeschlagen.
0,5 Gewichtsteile langfaserigen Zellstoff wird 20 min lang in 100 Teilen Wasser enthaltend 0,3 g Alginat mittels Dissolver aufgeschlagen. Anschließend wird mit Salzsäure auf pH 3 eingestellt. Dazu wird
2 Gewichtsteil Aktivkohlepulver Norit Supra zugegeben und danach der pH-Wert mit Salzsäure auf 0,5 eingestellt. Anschließend werden die beiden erhaltenen Suspensionen unter langsamem Durcharbeiten miteinander vermischt, bis ein homogener Brei entstanden ist und mit Wasser auf 1000 ml aufgefüllt. Anschließend wird die erhaltene Suspension auf ein planes Sieb geschüttet und abgesaugt. Das erhaltene feuchte Blatt wird im angepreßten Zustand bei 60 °C getrocknet. Es wird ein braunes papierähnliches Vlies erhalten, das etwa 6 % Eisen-lll-hydroxid und 20 % Aktivkohle enthält und von hinreichender Wasserfestigkeit ist. Das Wirkstoffgewebekomposit-Vlies eignet sich zur Entfernung von Chlor, lipophilen Stoffen, Schwermetallen, Selen und Arsen aus Wasser. Nach Behandlung mit Silbernitrat eignet es sich auch für den Langzeiteinsatz.

### Beispiel 6: Vliesähnliches Kompositprodukt auf Basis Naturschwamm und Zellstoff

Ein Gemisch, enthaltend
1 Gewichtsteil Natur-Badeschwamm gehäckselt, getrocknet und gesiebt mit einer Korngröße kleiner 10 mm,
0,5 Gewichtsteile langfaseriger Zellstoff
4 Gewichtsteile gemahlenes Kationenaustauschharz in der H-Form
wird 20 min lang in 100 Teilen Wasser, enthaltend 0,5 g Chitosan mittels Dissolver aufgeschlagen. Anschließend wird mit Natronlauge schwach alkalisch eingestellt und mit Wasser auf 1000 Teile Lösung verdünnt. Anschließend wird die erhaltene Suspension auf ein planes Sieb geschüttet und abgesaugt. Das erhaltene feuchte Blatt wird im angepreßten Zustand bei 60 °C getrocknet. Es wird ein braunes vliesähnliches Vlies erhalten, das etwa 15 % Eisen-lll-hydroxid enthält und von hinreichender Wasserfestigkeit ist. Das Wirkstoffgewebekomposit-Vlies wird anschließend mittels gegenläufiger Schneidewalzen zu "Vlies"-Wolle verarbeitet. Es eignet sich zur Erdalkalienentfernung aus Wasser. Nach Behandlung mit Silbernitrat eignet es sich auch für den Langzeiteinsatz.

## Patentansprüche

**1.** Produkte aus wolleähnlichen Organgewebe-Teilen aus einer oder mehrerer der Gruppen Pflanzen, ausgenommen die Baumwolle, die in ihrem Bestand an natürlichen Bindemitteln nicht abgereichert sind, und/oder aus wolleähnlichen Organgewebe-Teilen aus einer oder mehrerer der Gruppen Flechten und Tiere, deren gesamtes Organgewebe oder zumindest Teile desselben sich in einem, zumindest im feuchten und/oder trockenen Zustand, schmiegsamen flauschartigen Wolle-ähnlichen Zustand befinden oder in den sie mit der Hilfe künstlicher Mittel überführt worden sind, die **dadurch gekennzeichnet sind, daß** sie mit mindestens einem Wirkstoff imprägniert und/oder beschichtet sind, oder diesen Wirkstoff zumindest in mittels Bindemittel fixierter oder nicht mittels Bindemittel fixierter partikulärer Form und/oder faserförmiger Form und/oder andersartig geformt enthalten können, und wobei der Wirkstoff durch eine oder mehrere derjenigen Stoffeigenschaften gekennzeichnet ist, nämlich daß er
sorbierend wirkt auf einen oder mehrere der gasförmigen und/oder der gelösten Stoffe aus den Gruppen der organischen Stoffe, der anorganischen Stoffe, der anionischen Stoffe, der kationischen Stoffe der kolloidalen Stoffe und der mizellaren Stoffe;
chemisch umsetzend wirkt auf einen oder mehrere der in wäßrigen und nichtwäßrigen Flüssigkeiten und/oder Gasen dispergierten und/oder gas-förmigen und/oder gelösten Stoffe;
chemisch umsetzend wirkt auf einen oder mehrere der in wäßrigen und nichtwäßrigen Flüssigkeiten und/oder Gasen dispergierten und/oder gasförmigen und/oder gelösten Stoffe bei photolytischer und/oder strahlenchemischer Anregung;
katalytisch beschleunigend und/oder katalytisch lenkend auf chemische Umsetzungen von Stoffen wirkt, die in wäßrigen und nichtwäßrigen Flüssigkeiten und/oder Gasen dispergiert und/oder gasförmig und/oder gelöst vorliegen.

**2.** Produkte gemäß Anspruch 1, **dadurch gekennzeichnet, daß** sie in ihrem Bindemittelbestand unveränderte komplette pflanzliche Organismen oder pflanzliche Organteile enthalten in der Form von
- Wolle oder "Locken" bildender Vielzahl schmaler und/oder breiter Langspäne aus dem Holz verholzter Planzenteile,
- zu Faserbündeln aufgefaserten oder kompletten Pflanzenteile aus Bambus, Stroh, Heu, Kokosfaserwolle, Moos, Luffa, Bast,
- Pflanzen-Mark,
- Wurzelballen,
- Torfmoose aus den Gattungen Sphagnum und
- Sphagnum-Torf,
unveränderten und/oder durch mindestens eine oder mehrere Formen der biologischen, chemischen und/oder thermischen Einwirkung veränderten kompletten Organismen und/oder Gewebeteilen von Organen von Organismen aus dem Reich der Flechten, Pilze und Tiere
- aus den Flechten-Gattungen Usnea, Bryoria, Evernia, Ramalina, Parmelia, Xanthoria,
- aus den Flechten der Flechtenheide aus den Gattungen Cladonia, Alectoria, und Cetraria,
- aus den Familien der Schwämme, die Spongin-Schwammskelett-Substanz enthalten, insbesondere aus den Hornkieselschwämmen und Baumfaserschwämmen,
- aus den Familien der Schwämme die Spongin-Schwammskelett-Substanz enthalten, insbesondere aus den Arten Spongia officinalis, Haliclona losanoffi, Haliclona oculata, Axinella verrucosa, Polymastia robusta,
- aus den Familien der Korallen die Skelett-Substanzen von Horn- und Lederkorallen,
- aus den Familien der Wirbeltiere die Federn und Daunen der Federn tragenden Arten.

**3.** Produkte gemäß einem der Ansprüche 1 oder 2, **dadurch gekennzeichnet, daß** sie Bestandteile enthalten, die mit einem oder mehreren Wirkstoffen und/oder Wirkstoff-Precursor beladen sind, die ausgewählt sind aus einer oder mehreren der Stoffgruppen der Stoffe, die sich als Ergebnis einer chemischen Reaktion zwischen mindestens zwei Reaktionsteilnehmern und/oder einer physikalischen Reaktion niederschlagen lassen aus einem Medium, das mindestens in einem der Materiezustände aus den Gruppen flüssige homogene Phasen, flüssige Emulsionen, flüssige Suspensionen, dichte Gasphasen, einfachen Gasphasen, feste Phasen vorliegt, und wobei die Wirkstoffe mit Flüssigkeits- und/oder Gasinhaltsstoffen Bindungen und/oder Reaktionen eingehen, mittels derer diese abgebaut werden, und/oder an den Organgewebe-Teilen gebunden werden.

**4.** Produkte gemäß einem der Ansprüche 1 bis 3, **dadurch gekennzeichnet, daß** sie mindestens einen Wirkstoff enthalten, der ausgewählt ist aus einer oder mehreren der Stoffgruppen
- organische Substanzen, darunter bevorzugt die Naturstoffe und ihre chemischen Modifikationen,
- natürliche und künstliche Huminstoffe und ihre Salze,
- in Wasser schwerlösliche oder unlösliche organische Säuren,
- Polysaccharide und ihre Derivate einschließlich ihrer Salze,
- Polynucleotide und ihre Salze,
- Stärke,
- Nucleinsäuren und ihre salzartigen Verbindungen,
- Lignine, Ligninabbauprodukte, Ligninsulfonsäuren sowie Salze der Lignine, ihrer Abbauprodukte und der Ligninderivate,
- Gerbstoffe und ihre Salze,
- lipophile und oleophile Stoffe,
- anorganische Sorbentien aus den Gruppen der Oxide, Mischoxide, Hydroxide, Sulfide, Selenide,
- Komplexverbindungs- und Einschlußverbindungs-Bildner,
- gelbildende und kolloidbildende Stoffe,
- amalgamierbare Metalle,
- Katalysatoren, Enzyme und Photokatalysatoren,
- zur Aufnahme von Wasserstoff fähige Platinmetalle,
- organische Komplexbildner für anorganische Stoffe,
- Silber und Silbersalze,
- feste Elemente,
- Salze und Silikate,
- Platinmetalle und ihre Hydride,
- Gold als Metallisierung, Kolloid und Blattgold,
- Lanthanide, Actinide, ihre Salze und Verbindungen,
- Schwermetalle, ihre Salze und Verbindungen,
- Porphine und ihre Verbindungen,
- schwerlösliche Hydroxide, Oxide und Mischoxide,
- durch Hydrolyse von in wäßrigen und/oder organischen Lösungsmitteln gelösten Metallverbindungen ausgefällten sauerstoffhaltigen Metallverbindungen,
- Oxide und/oder Hydroxide von Eisen, Aluminium und Mangan und ihre Mischphasen
- schwerlösliche Sulfide und Mischsulfide,
- Flockmittel, quellfähige Polymere und Polyelektrolyte,
- Alginsäure, Alginate und Chitosane,
- photolytisch aktivierbare organische und anorganische Stoffe,
- galvanisch oder chemisch gefällte Metallisierungen,
- Metallseifen.

**5.** Verfahren zur Herstellung der Produkte gemäß Anspruch 1 umfassend die Schritte:
a) daß die Prozeßfolge zur Herstellung der Produkte für den einen Fall, daß die Wolle-ähnlichen Organgewebe-Teile Pflanzengewebe enthalten, die ggf. notwendige Überführung der Pflanzenteile bis in den Wolle-ähnlichen Zustand ausschließlich Prozeßschritte mechanischer Bearbeitung und/oder biologischer Metabolisation und/oder natürlicher bodenchemischer bzw. geochemischer Umsetzung umfassen; und
b) daß die Prozeßfolge zur Herstellung der Produkte mindestens eine Prozeßstufe enthält, in der ein Wirkstoff und/oder ein Wirkstoffprecursor aus einem fluiden Medium auf den wolleähnlichen und/oder wolleähnlich konditionierten Organgewebe-Teilen aufgetragen wird und/oder auf diesen angelagert wird und/oder in diesen eingelagert wird; und gegebenenfalls
c) daß die Prozeßfolge zur Herstellung der Produkte mindestens eine Prozeßstufe enthält, in der mindestens ein Wirkstoffprecursor, der auf den wolleähnlichen und/oder wolleähnlich konditionierten Gewebeteilen aufgetragen worden ist und/oder auf diesen angelagert worden ist und/oder in diesen eingelagert worden ist, durch mindestens eine chemische und/oder physikalische Reaktion in einen Wirkstoff umgewandelt worden ist, und gegebenenfalls
d) daß die Prozeßfolge zur Herstellung der Produkte mindestens einen Verfahrensschritt zur Zerkleinerung der Wolle-ähnlichen Organgewebe-Teile beinhaltet.

**5.** Verfahren zur Herstellung der Produkte gemäß Anspruch 4, **dadurch gekennzeichnet, daß** die Wirkstoffe vor ihrer Anwendung auf Holzwolle und/oder zerkleinerte Holzwolle appliziert werden und/oder erst im Verlaufe ihrer Anwendung auf die Holzwolle und/oder zerkleinerte Holzwolle appliziert werden.

**6.** Anwendung von Produkten gemäß einem der Ansprüche 1 bis 4 zu einer oder mehrerer der Anwendungen Gas- und Wasserbehandlung, zur Getränke-Behandlung, als Genußmittelzusatz, als Luftfilter, als Rauchgasfilter, als Gesichtsmaske für den Personenschutz, als Detektionsmittel, als Probenahmemittel und als Emissionsquelle, wobei die Herstellung dieser Organgewebe-Teile **dadurch gekennzeichnet ist, daß** ihre Herstellung eine Prozeßstufe enthält, in der in einem flüssigen und/oder gasförmigen Reaktionsmedium mindestens zwei Organgewebe-Teile-Fraktionen und ggf. Faserstoffe miteinander zur Reaktion gebracht werden, die sich dadurch unterscheiden, daß sie mit unterschiedlichen Wirkstoffprecursoren imprägniert sind, wobei der Unterschied der Wirkstoffprecursoren **dadurch gekennzeichnet ist, daß** die zwischen den Wirkstoffprecursoren ablaufende Reaktion die Bildung des Wirkstoffs zur Folge hat.

**7.** Anwendung von Produkten gemäß einem der Ansprüche 1 bis 4, die Organgewebe-Teile enthalten, die mit einem oder mehreren Wirkstoffen und/oder Wirkstoff-Precursor beladen sind zur Behandlung von Flüssigkeiten und/oder Gasen zur Verminderung und/oder Detektion des Gehaltes an einem oder mehreren der Stoffe aus den Stoffgruppen der
organischen Stoffe, darunter lipophile Stoffe, Fettsäuren und ihre Salze, Phenole, aromatische Amine, stickstoffhaltige Heterocyclen, Alkaloide, Gerbstoffe, Fulvinstoffe, Huminstoffe, aromatische und aliphatische Kohlenwasserstoffe, halogen-organische Verbindungen und der anorganischen Stoffe, darunter reduzierte Schwefelverbindungen, z.B. Schwefelwasserstoff, seine Salze und seine organischen Derivate (Mercaptane, Mercaptide, Disulfide), Schwefelkohlenstoff, Thiocyanate, oxidierte Schwefelverbindungen, z.B. Sulfate, Elemente, z.B. Radon, Quecksilber, Jod, Chlor und Brom, als lonen und Komplexe vorliegende Metalle, Metalloide, und Nichtmetalle z.B. Erdalkalien, Aluminium, Blei, Kupfer, Cadmium, Chrom, Quecksilber, Nickel, Arsen, Antimon, Wismut und Selen, Jodid, sowie auch Radionuklide und Edelmetalle.

**9.** Anwendung von Produkten gemäß einem der Ansprüchw 1 bis 4, die Organgewebe-Teile enthalten, die mit einem oder mehreren Wirkstoffen und/oder Wirkstoff-Precursor enthaltend Eisen in einer oder mehrerer Bindungsformen beladen sind, zur Behandlung von Flüssigkeiten und/oder Gasen zur Verminderung und/oder Detektion des Gehaltes an einem oder mehreren der Stoffe aus den Stoffgruppen der
- carbocyclischen und heterocyclischen einkernigen und mehrkernigen Aromaten die mit Heterofunktionen wie -OH, -SH, -SeH, -NH₂, -COOH substituiert sind, darunter z.B. die Gerbstoffe, die Fulvinstofe und die Huminstoffe,
- Amine und ihre substituierten Derivate,
- Imine und Nitrile,
- Diketone,
- stickstoffhaltigen Heteroaromaten, wie z.B. Pyridin, Chinolin, Dibenzofuran, Phenantrolin, Acridin, Carbazol, Dihydroacridin, Azapyren, Iminophenanthren, Thebenidinon, Phenanthridon, Indolochinolin, Triazinderivate,
- stickstoffhaltigen aromatischen und nichtaromatischen Heterocyclen, wie z.B. die Alkaloide und Heterocyclen enthaltend die Pyrrol- und/oder Hydropyrrol-Einheiten,
- Schwefel- oder Sauerstoff-haltigen aromatischen Heterocyclen, z.B. Benzoxanthen, Dibenzofuran, Xanthen, Dibenzothiophen.
